# EUROPEAN PATENT SPECIFICATION

(11) **EP 3 139 424 B1**
(45) Date of publication and mention of the grant of the patent: **03.10.2018**
(21) Application number: 16175885.9
(22) Date of filing: 23.06.2016
(51) Int. Cl.: H01M 2/02, H01M 2/16, H01M 10/04, H01M 2/08, H01M 10/052, H01M 10/058

(54) **BENDABLE ELECTROCHEMICAL DEVICE FOR STORING ENERGY**
BIEGBARE ELEKTROCHEMISCHE VORRICHTUNG ZUR SPEICHERUNG VON ENERGIE
DISPOSITIF ÉLECTROCHIMIQUE PLIABLE DE STOCKAGE D'ÉNERGIE

(30) Priority: 04.09.2015 KR 20150125605
(43) Date of publication of application: 08.03.2017
(73) Proprietor: Samsung Electronics Co., Ltd., Gyeonggi-do 16677 (KR)
(72) Inventor: KWON, Moonseok, 16678 Gyeonggi-do (KR); LEE, Yoonhoi, 16678 Gyeonggi-do (KR); CHOI, Jaeman, 16678 Gyeonggi-do (KR); CHANG, Jaejun, 16678 Gyeonggi-do (KR)
(74) Representative: Portch, Daniel

(56) References cited:
- JP-A- 2000 251 855
- JP-A- 2001 250 515
- US-A1- 2012 028 109
- US-A1- 2013 171 490

## Description

### BACKGROUND

### 1. Field

The disclosure relates to an electrochemical device, and more particularly, to a repeatedly bendable electrochemical device for storing energy.

### 2. Description of the Related Art

Electrochemical devices capable of storing energy include, for example, super-capacitors, secondary batteries, etc. In particular, a lithium secondary battery is widely used as a power source for mobile electronic devices. The lithium secondary battery has a higher voltage and a higher energy density per unit weight than a nickel-cadmium battery or a nickel-hydrogen battery. The lithium secondary battery mainly uses a lithium-based oxide as a positive electrode active material layer, and mainly uses a carbon material as a negative electrode active material layer. Generally, lithium secondary batteries are divided into liquid electrolyte batteries and polymer electrolyte batteries, based on the types of electrolytes. A battery using a liquid electrolyte is referred to as a lithium ion battery, and a battery using a polymer electrolyte is referred to as a lithium polymer battery.

Recently, as interest in flexible electronic devices has increased, research into manufacturing bendable secondary batteries which may be used in flexible electronic devices has been conducted. JP 2000 251885 teaches a secondary battery sealing structure having a folded portion.

### SUMMARY

Embodiments disclosed herein are directed to a bendable electrochemical device for storing energy. According to an aspect of the invention, there is provided an electrochemical device according to claim 1.

In an embodiment, at least one of a portion of the first packing film and a portion of the second packing film, which define the accommodation portion, protrudes in the thickness direction.

The packing member includes at least two accommodation portions and further includes a connection portion which connects the at least two accommodation portions to each other. In such an embodiment, a thickness of the connection portion may be less than a thickness of the at least two accommodation portions. In such an embodiment, the connection portion may be bent to have a curved bending portion in the region in the length direction.

In an embodiment, a center of curvature of each of points on the bending portion may be located in one of a first space and a second space which are on opposite sides to each other, based on the bending portion. In such an embodiment, the bending portion may have a bending direction conversion point where a location of the center of curvature may be changed from the first space to the second space or from the second space to the first space.

In an embodiment, a portion of the bonded portion may be folded such that the third gas barrier layer is defined to surround the first bonded sealing layer to form the first gas barrier rim portion.

In an embodiment, the first gas barrier rim portion may include: a first portion in which a portion of the bonded portion extends from a side surface of the accommodation portion in the width direction; a second portion which continuously extends from the first portion and is bent by about 180 degrees; and a third portion which continuously extends from the second portion in the width direction and faces the first portion.

In an embodiment, the third gas barrier layer may be defined by a portion of the first gas barrier layer or the second gas barrier layer. In such an embodiment, the third gas barrier layer may extend from the first gas barrier layer or the second gas barrier layer in the first portion of the first gas barrier rim portion.

In an embodiment, the first portion and the third portion of the first gas barrier rim portion may be bonded to each other.

In an embodiment, the first bonded sealing layer may be bonded to a surface of the first packing film.

In an embodiment, the second portion of the first gas barrier rim portion may be folded in a protrusion direction of the accommodation portion.

In an embodiment, the second portion of the first gas barrier rim portion may be folded in a direction opposite a protrusion direction of the accommodation portion.

In an embodiment, the first gas barrier rim portion may further include a fourth portion in which a portion of the bonded portion continuously extends from the third portion and is additionally bent, and a fifth portion continuously extending from the fourth portion and parallel to the first portion and the third portion.

In an embodiment, the first packing film and the second packing film may be separately formed.

In an embodiment, the first packing film and the second packing film may be integrally formed.

In an embodiment, a first edge of the first packing film in the length direction and a first edge of the second packing film in the length direction may be integrally connected to each other. In such an embodiment, the integrally connected portion of the first packing film and the second packing film may be folded along the width direction, and a second edge of the first packing film in the length direction and a second edge of the second packing film in the length direction are bonded to each other.

In an embodiment, the first edge of the first packing film in the width direction and the first edge of the second packing film in the width direction may be integrally connected to each other. In such an embodiment, the integrally connected portion of the first packing film and the second packing film may be folded along the length direction, and a second edge of the first packing film in the width direction and a second edge of the second packing film in the width direction are bonded to each other.

In an embodiment, the first gas barrier rim portion may include: a third portion bent to face the first packing film; a first portion bent in an opposite direction to the third portion so as to face the second packing film; and a second portion continuously extending between the first portion and the third portion.

In an embodiment, the packing member may further include a third packing film, separated from the first and second packing films. In such an embodiment, the third packing film may include a gas barrier layer and a sealing layer. In such an embodiment, the third packing film may surround the first bonded sealing layer. In such an embodiment, the gas barrier layer of the third packing film may be bonded to the first sealing layer and the second sealing layer to define the third gas barrier layer.

In an embodiment, at least one of the first gas barrier layer and the second gas barrier layer may have a multi-layered structure.

In an embodiment, the first gas barrier rim portion may be bent around the axis of the width direction, in the region in the length direction, and an inside radius of curvature of the region in the length direction in which the first gas barrier rim portion is bent may be in a range of about 0.2 millimeter (mm) to about 800 mm.

In an embodiment, at least one of the first packing film and the second packing film may be stretchable in the at least one region in the length direction so that the first gas barrier rim portion is allowed to be repeatedly bending in the at least one region in the length direction.

In an embodiment, the at least one of the first gas barrier layer and the second gas barrier layer may include a plurality of concavo-convex shaped portion or wrinkle shaped portion in the length direction.

In an embodiment, at least one of the first packing film and the second packing film may include a stretchable material in the at least one region in the length direction.

In an embodiment, a thickness of the electrochemical device may be less than about 1 mm in a region in the length direction or in an entire region in the length direction.

In an embodiment, the first gas barrier rim portion includes at least two regions in the length direction such that the first gas barrier rim portion is bendable around the axis of the width direction, and the at least two regions of the first gas barrier rim portion are discontinuously disposed.

In an embodiment, a first width in a first location in the length direction and a second width in a second location in the length direction may be different from each other, where the first location and the second location are different from each other.

In an embodiment, the electrochemical device may further include a tab disposed in an end in the length direction, where the tab being extends from an inside of the packing member to an outside of the packing member.

In an embodiment, the bonded portion may further include a second gas barrier rim portion disposed on a side opposite the first gas barrier rim portion in the width direction and extending in the length direction. In such an embodiment, the second gas barrier rim portion may include a second bonded sealing layer in which a second area of the first sealing layer and a second area of the second sealing layer are bonded to each other, and a fourth gas barrier layer contacting the second bonded sealing layer. In such an embodiment, the fourth gas barrier layer may include a bottom portion and an upper portion parallel to the second bonded sealing layer and disposed at different heights from each other, and a middle portion continuously extending between the bottom portion and the upper portion and bent to surround an end of the second bonded sealing layer in the width direction.

In an embodiment, the first packing film may further include a first outer insulating layer, and the second packing film may further include a second outer insulating layer. In such an embodiment, the first sealing layer and the first outer insulating layer may be disposed on opposite surfaces of the first gas barrier layer, respectively, and the second sealing layer and the second outer insulating layer may be disposed on opposite surfaces of the second gas barrier layer, respectively.

In an embodiment, the electrode assembly may be configured to allow repeated bending around the axis of the width direction.

### BRIEF DESCRIPTION OF THE DRAWINGS

These and/or other features of embodiments of the invention will become apparent and more readily appreciated from the following description of the embodiments, taken in conjunction with the accompanying drawings, in which:
FIG. 1 is a cross-sectional view of a structure of an electrochemical device for storing energy, according to an exemplary embodiment;
FIG. 2 is a perspective view of the structure of the electrochemical device for storing energy illustrated in FIG. 1, according to an exemplary embodiment;
FIG. 3 is a cross-sectional view of a structure of an electrode assembly implemented in the electrochemical device for storing energy of FIG. 1, according to an exemplary embodiment;
FIG. 4 illustrates a state in which the electrode assembly of FIG. 3 is bent, according to an exemplary embodiment;
FIG. 5 is a cross-sectional view of a structure of an electrochemical device for storing energy, according to an alternative exemplary embodiment;
FIG. 6 is a perspective view of the structure of the electrochemical device for storing energy illustrated in FIG. 5, according to an exemplary embodiment;
FIG. 7 is a cross-sectional view of a front surface of a first bonded portion of the electrochemical device for storing energy of FIG. 5, according to an exemplary embodiment;
FIG. 8 is a perspective view showing a partial section of the first bonded portion of the electrochemical device for storing energy of FIG. 5, according to an exemplary embodiment;
FIG. 9 is a cross-sectional view of a side surface of the first bonded portion of the electrochemical device for storing energy of FIG. 5, according to an exemplary embodiment;
FIGS. 10 and 11 are perspective views of structures of electrochemical devices for storing energy, according to alternative exemplary embodiments;
FIG. 12 is a cross-sectional view of the structure of the electrochemical device for storing energy illustrated in FIG. 11, according to an exemplary embodiment;
FIG. 13 is a cross-sectional view of a structure of an electrochemical device for storing energy, according to another alternative exemplary embodiment;
FIG. 14 is a perspective view of a structure of an electrochemical device for storing energy, according to another alternative exemplary embodiment;
FIG. 15 is a cross-sectional view of the structure of the electrochemical device for storing energy illustrated in FIG. 14, according to an exemplary embodiment;
FIG. 16 is a perspective view of a structure of an electrochemical device for storing energy, according to another alternative exemplary embodiment;
FIGS. 17 through 21 are cross-sectional views of structures of electrochemical devices for storing energy, according to other alternative exemplary embodiments;
FIG. 22 is a perspective view of a structure of an electrochemical device for storing energy, according to another alternative exemplary embodiment;
FIG. 23 is a cross-sectional view of the structure of the electrochemical device for storing energy illustrated in FIG. 22, according to an exemplary embodiment;
FIGS. 24 through 27 are cross-sectional views of structures of electrochemical devices for storing energy, according to other alternative exemplary embodiments;
FIG. 28 is a perspective view of a structure of an electrochemical device for storing energy, according to an exemplary embodiment of the invention;
FIG. 29 is a plan view of the structure of the electrochemical device for storing energy illustrated in FIG. 28 according to an exemplary embodiment of the invention;
FIG. 30A is a cross-sectional view taken along line A-A' of the electrochemical device for storing energy of FIG. 28;
FIG. 30B is a cross-sectional view of an accommodation portion of the electrochemical device for storing energy of FIG. 28 in a width direction, according to an exemplary embodiment;
FIG. 31 is a cross-sectional view of the electrochemical device for storing energy of FIG. 28 in a length direction, according to an exemplary embodiment of the invention;
FIG. 32 is a view showing a change in a location of a center of curvature according to locations of points on a bending portion of the electrochemical device for storing energy of FIG. 28, according to an exemplary embodiment of the invention;
FIG. 33 is a perspective view of a structure of an electrochemical device for storing energy, according to another alternative exemplary embodiment of the invention;
FIG. 34 is a plan view of a structure of an electrochemical device for storing energy, according to another alternative exemplary embodiment of the invention;
FIG. 35 is a perspective view of a structure of an electrochemical device for storing energy, according to another alternative exemplary embodiment of the invention;
FIG. 36 is a side view of the structure of the electrochemical device for storing energy illustrated in FIG. 35;
FIG. 37 is a cross-sectional view taken along line B-B' of the electrochemical device for storing energy of FIG. 35; and
FIG. 38 is a perspective view of a structure of an electrochemical device for storing energy, according to another alternative exemplary embodiment of the invention.

### DETAILED DESCRIPTION

The invention now will be described more fully hereinafter with reference to the accompanying drawings, in which various embodiments are shown. This invention may, however, be embodied in many different forms, and should not be construed as limited to the embodiments set forth herein. Rather, these embodiments are provided so that this disclosure will be thorough and complete. Like reference numerals refer to like elements throughout.

It will be understood that when an element is referred to as being "on" another element, it can be directly on the other element or intervening elements may be present therebetween. In contrast, when an element is referred to as being "directly on" another element, there are no intervening elements present.

It will be understood that, although the terms "first," "second," "third" etc. may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, "a first element," "component," "region," "layer" or "section" discussed below could be termed a second element, component, region, layer or section without departing from the teachings herein.

The terminology used herein is for the purpose of describing particular embodiments only and is not intended to be limiting. As used herein, the singular forms "a," "an," and "the" are intended to include the plural forms, including "at least one," unless the content clearly indicates otherwise. "Or" means "and/or." As used herein, the term "and/or" includes any and all combinations of one or more of the associated listed items. It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Furthermore, relative terms, such as "lower" or "bottom" and "upper" or "top," may be used herein to describe one element's relationship to another element as illustrated in the Figures. It will be understood that relative terms are intended to encompass different orientations of the device in addition to the orientation depicted in the Figures. For example, if the device in one of the figures is turned over, elements described as being on the "lower" side of other elements would then be oriented on "upper" sides of the other elements. The exemplary term "lower," can therefore, encompasses both an orientation of "lower" and "upper," depending on the particular orientation of the figure. Similarly, if the device in one of the figures is turned over, elements described as "below" or "beneath" other elements would then be oriented "above" the other elements. The exemplary terms "below" or "beneath" can, therefore, encompass both an orientation of above and below.

"About" or "approximately" as used herein is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" can mean within one or more standard deviations, or within ± 30%, 20%, 10%, 5% of the stated value.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Exemplary embodiments are described herein with reference to cross section illustrations that are schematic illustrations of idealized embodiments. As such, variations from the shapes of the illustrations as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the figures are schematic in nature and their shapes are not intended to illustrate the precise shape of a region.

Hereinafter, exemplary embodiments of the invention will be described in detail with reference to the accompanying drawings.

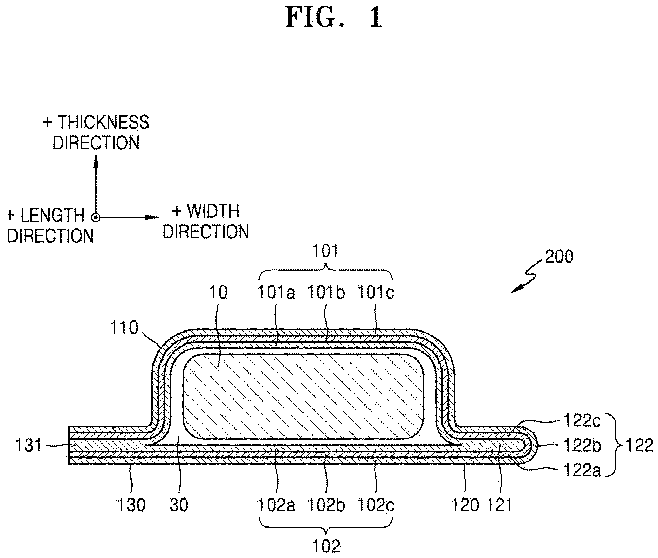

FIG. 1 is a cross-sectional view of a structure of an electrochemical device 200 for storing energy, according to an exemplary embodiment. Referring to FIG. 1, an exemplary embodiment of the electrochemical device 200 may include an electrode assembly 10 and a packing member 101 and 102 in which the electrode assembly 10 is disposed. The electrochemical device 200 may further include an electrolyte 30 disposed in the packing member 101 and 102.

The packing member 101 and 102 may be configured or formed to be airtight to prevent deterioration of the electrode assembly 10 and the electrolyte 30 by being exposed to external air and water. In such an embodiment, the packing member 101 and 102 may be formed by using a thin and light material, to minimize an increase of volume and weight of the electrochemical device 200 due to the packing member 101 and 102. In one exemplary embodiment, for example, the packing member 101 and 102 may include: a first packing film 101 including a first gas barrier layer 101b and a first sealing layer 101a; and a second packing film 102 including a second gas barrier layer 102b and a second sealing layer 102a. In such an embodiment, the first packing film 101 and the second packing film 102 may further include first and second outer insulating layers 101c and 102c disposed at outermost portions of the first and second gas barrier layer 101b and 102b, respectively. In such an embodiment, the first sealing layer 101a and the first outer insulating layer 101c may be disposed on opposite surfaces of the first gas barrier layer 101b, respectively, and the second sealing layer 102a and the second outer insulating layer 102c may be disposed on opposite surfaces of the second gas barrier layer 102b.

The first and second gas barrier layers 101b and 102b may include or be formed of a material having high air tightness to decrease a transmittance rate of moisture or air molecules. In one exemplary embodiment, for example, the first and second gas barrier layers 101b and 102b may include or be formed of a thin metal foil or may have a stacking structure including a plurality of metal layers. In such an embodiment, the first and second gas barrier layers 101b and 102b may be formed by forming inorganic materials, such as graphene particles or clay particles, as a plate form, in addition to the metal. In an exemplary embodiment, the first and second gas barrier layers 101b and 102b may include or be formed of a polymer material having a very low gas transmittance rate. In one exemplary embodiment, for example, the polymer material having a very low gas transmittance rate may include polyketone, fluoropolymer, polyvinylidene chloride ("PVDC"), ethylene vinyl alcohol ("EVOH"), liquid crystal polymer ("LCP"), etc. In a general use environment of the electrochemical device 200, a water vapor transmission rate ("WVTR") or an oxygen transmission rate ("OTR") of the first and second gas barrier layers 101b and 102b may be equal to or less than about one-fifth of a WVTR or an OTR of the first and second sealing layers 101a and 102a.

The first and second sealing layers 101a and 102a may bond the first and second packing films 101 and 102 to have air tightness, so that the packing member 101 and 102 obtains air tightness. Although the first and second sealing layers 101a and 102a have lower air tightness than the first and second gas barrier layers 101b and 102b, with sufficient bonding width may be obtained desired air tightness. In such an embodiment, the first and second sealing layers 101a and 102a may be formed of a material which may be bonded to other parts. In one exemplary embodiment, for example, the first and second sealing layers 101a and 102a may include a polyolefin-based thermoplastic resin, such as polyethylene ("PE") or polypropylene ("PP"). In an exemplary embodiment, although it is not illustrated in FIG. 1, the packing member 101 and 102 may further include a bonding layer disposed between the first and second sealing layers 101a and 102a and the first and second gas barrier layers 101b and 102b, respectively, to bond the first and second sealing layers 101a and 102a and the first and second gas barrier layers 101b and 102b. Hereinafter, the phrase "the first and second sealing layers 101a and 102a and the first and second gas barrier layers 101b and 102b are respectively bonded" may mean that bonding layers are additionally disposed between the first and second sealing layers 101a and 102a and the first and second gas barrier layers 101b and 102b respectively.

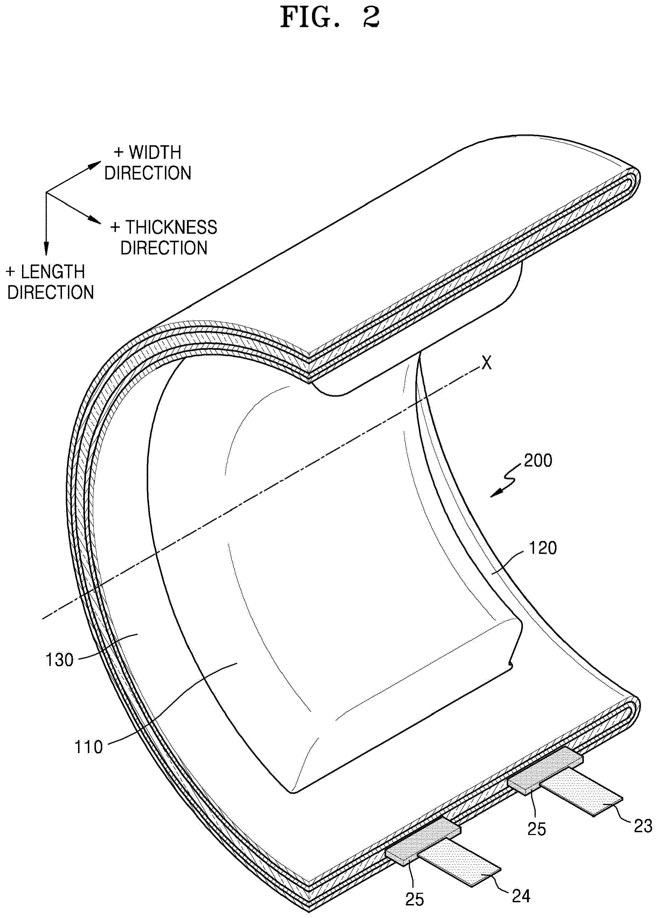

The electrochemical device 200 or the electrode assembly 10 may have a length direction, a thickness direction, and a width direction, which are defined according to three perpendicular directions. In one embodiment, for example, as shown in FIG. 1, a horizontal direction may be defined as the width direction, a vertical direction may be defined as the thickness direction, and a direction protruding from the drawing may be defined as the length direction. Generally, the electrochemical device 200 may be formed such that the length direction is larger than the width direction. Here, when the electrochemical device 200 is bent, the above-described directions may be changed according to a location of the electrochemical device 200. In an exemplary embodiment, when the electrochemical device 200 is bent around, or in a direction of surrounding, an axis in the width direction, as illustrated in FIG. 2, the width direction is constant in all locations of the electrochemical device 200, but the length direction and the thickness direction may be continuously changed according to the locations of the electrochemical device 200. When the electrochemical device 200 is bent or curved, the length direction may be defined as a tangential direction contacting a curved surface in each of the locations of the electrochemical device 200, and the thickness direction may be defined as a direction extending perpendicularly to the tangential direction toward a curvature center of the curved surface, as shown in FIG. 2.

In an exemplary embodiment, the packing member 101 and 102 is formed by bonding the first packing film 101 and the second packing film 102 with the electrode assembly 10 therebetween. In such an embodiment, the packing member 101 and 102 may include an accommodation portion 110 for accommodating the electrode assembly 10, and further include first and second bonded portions 120 and 130 at which the first packing film 101 and the second packing film 102 are bonded to each other. The accommodation portion 110 may be defined by a portion where the first packing film 101 and the second packing film 102 are spaced apart from each other and a space is defined therebetween. The accommodation portion 110 may protrude in the thickness direction with respect to the first and second bonded portions 120 and 130. In such an embodiment, a thickness of the accommodation portion 110 may be larger than thicknesses of the first and second bonded portions 120 and 130. As shown in FIG. 1, the first packing film 101 protrudes in a positive (+) thickness direction to form the accommodation portion 110. However, exemplary embodiments are not limited thereto. In an alternative embodiment, and the second packing film 102 may protrude in a negative (-) thickness direction to form the accommodation portion 110. In the accommodation portion 110, not only the electrode assembly 10, but also the electrolyte 30 and wires (not shown) may be disposed together.

In an exemplary embodiment, the accommodation portion 110 may be located approximately at a center based on the width direction, and the first and second bonded portions 120 and 130 may be located to protrude in both width directions, with respect to the accommodation portion 110. Thus, the first bonded portion 120 and the second bonded portion 130 may be disposed on opposite sides to each other in the width direction, based on the accommodation portion 110. In such an embodiment, the first and second bonded portions 120 and 130 may be formed by bonding edges of the first packing film 101 and the second packing film 102. In such an embodiment, as shown in FIG. 1, the protruding first and second bonded portions 120 and 130 are formed at both sides of the first accommodation portion 110, respectively. However, exemplary embodiments are not limited thereto. Alternatively, any one of the first and second bonded portions 120 and 130 may be formed. In one alternative exemplary embodiment, for example, only one of the first and second bonded portions 120 and 130 may protrude in the width direction, from a side surface of the accommodation portion 110. The first and second bonded portions 120 and 130 may extend long in the length direction, along the side surface of the accommodation portion 110. In such an embodiment, the lengths of the first and second bonded portions 120 and 130 may be larger than widths of the first and second bonded portions 120 and 130.

In the first and second bonded portions 120 and 130, the first sealing layer 101a and the second sealing layer 102a may be completely bonded to each other and may define a single and unitary layer in which the first sealing layer 101a and the second sealing layer 102a are not separated from each other. Hereinafter, the layer in which the first sealing layer 101a and the second sealing layer 102a are completely bonded to each other and are not separated from each other will be defined as a bonded sealing layer. In one exemplary embodiment, for example, the first bonded portion 120 may include a first bonded sealing layer 121 formed by bonding right side edges of the first sealing layer 101a and the second sealing layer 102a in the width direction, and the second bonded portion 130 may include a second bonded sealing layer 131 formed by bonding left side edges of the first sealing layer 101a and the second sealing layer 102a in the width direction. The first gas barrier layer 101b and the second gas barrier layer 102b are disposed on an upper surface and a lower surface of the first and second bonded sealing layers 121 and 131, respectively, and thus, gas molecules may be effectively prevented from flowing from an outside into the first and second bonded sealing layers 121 and 131 in the thickness direction, or such a penetration of gas molecules into the first and second bonded sealing layers 121 and 131 may be effectively delayed.

The first and second bonded sealing layers 121 and 131 may extend in the length direction. In such an embodiment, the gas molecules flowing into the first and second bonded sealing layers 121 and 131 in the length direction may be prevented from reaching the inside of the accommodation portion 110, or this process may be delayed. As thicknesses of the first and second bonded sealing layers 121 and 131 decrease and lengths of the first and second bonded sealing layers 121 and 131 increase, a delay effect may be improved. In one exemplary embodiment, for example, the thicknesses of the first and second bonded sealing layers 121 and 131 may be equal to or less than about 0.5 millimeter (mm), and the lengths of the first and second bonded sealing layers 121 and 131 may be equal to or larger than about 2 mm. In an exemplary embodiment, the first and second bonded sealing layers 121 and 131 may extend in the width direction. In order to increase the air tightness of the electrochemical device 200 and the strength of the first and second bonded sealing layers 121 and 131, the widths of the first and second bonded sealing layers 121 and 131 may be increased. However, if the widths of the first and second bonded sealing layers 121 and 131 are too large, an energy density of the electrochemical device 200 may become low. Accordingly, in an exemplary embodiment, the widths of the first and second bonded sealing layers 121 and 131 may be in a range between about 0.4 mm to about 20 mm.

In an exemplary embodiment, a third gas barrier layer 122 contacting at least one of the first and second bonded sealing layers 121 and 131 may be defined at an end of the width direction of at least one of the first and second bonded sealing layers 121 and 131. In one exemplary embodiment, for example, as illustrated in FIG. 1, only the first bonded portion 120 includes the third gas barrier layer 122 contacting the first bonded sealing layer 121. The third gas barrier layer 122 may be disposed to surround the first bonded sealing layer 121 at the end of the width direction of the first bonded sealing layer 121. In one exemplary embodiment, for example, the third gas barrier layer 122 may include a bottom portion 122a and an upper portion 122c which are parallel to the first bonded sealing layer 121 and disposed at different heights from each other, and a middle portion 122b which continuously extends between the bottom portion 122a and the upper portion 122c and is bent to surround the end of the width direction of the first bonded sealing layer 121. The third gas barrier layer 122 may effectively prevent gas molecules from flowing from the outside into the first bonded sealing layer 121 along the width direction, or may delay such a gas flow.

In an exemplary embodiment, the third gas barrier layer 122 may extend in the length direction. In such an embodiment, when the third gas barrier layer 122 is bent in the middle portion 122b, as described above, such that stress is largely concentrated in the third gas barrier layer 122, and thus, damage may occur to the third gas barrier layer 122 if the length in which the third gas barrier layer 122 extends in the length direction is too short. In an exemplary embodiment, the length in which the third gas barrier layer 122 extends in the length direction may be substantially great, e.g., equal to or larger than about 2 mm. The length of the third gas barrier layer 122 in the length direction may be defined as a length in a state in which the third gas barrier layer 122 is straightened and is not bent in a direction around the axis of the width direction. In an exemplary embodiment, the third gas barrier layer 122 may extend in the width direction. In such an embodiment, a width of the third gas barrier layer 122 may be equal to or larger than about 0.4 mm to have effectively high air tightness. Here, the width of the third gas barrier layer 122 may be defined as a distance extending continuously between the bottom portion 122a of the third gas barrier layer 122 and the upper portion 122c of the third gas barrier layer 122, along the width direction. In an exemplary embodiment, a distance in the thickness direction between a neutral plane of the bottom portion 122a of the third gas barrier layer 122 and a neutral plane of the upper portion 122c of the third gas barrier layer 122 may be less than about 1 mm. Here, the neutral plane is a virtual plane inside the third gas barrier layer 122, which is the least transformed or under the least stress (e.g., no stress) when the third gas barrier layer 122 is folded. If the distance between the bottom portion 122a and the upper portion 122c of the third gas barrier layer 122 becomes larger, e.g., greater than about 1 mm, damage is more likely to occur to the third gas barrier layer 122. In an exemplary embodiment, where the distance is less than 1 mm, the damage is less likely to occur. In one exemplary embodiment, for example, the distance is equal to or less than 0.5 mm, such that the damage may be even less likely to occur.

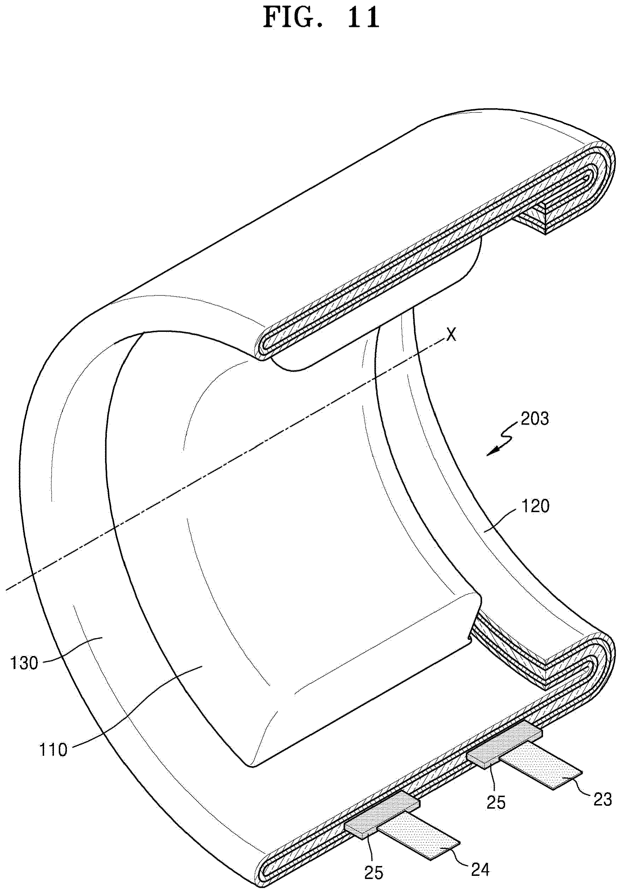

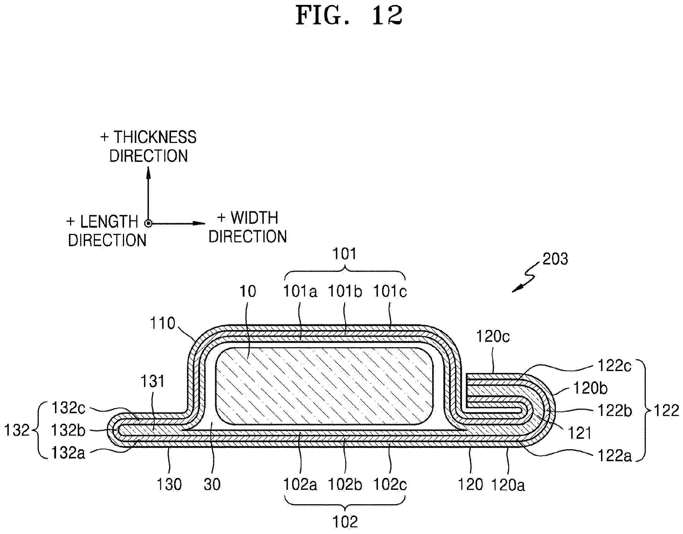

Hereinafter, the first bonded portion 120 including the third gas barrier layer 122 contacting the first bonded sealing layer 121 is defined as a first gas barrier rim portion. In an exemplary embodiment, the second bonded portion 130 may include a fourth gas barrier layer 132 contacting the second bonded sealing layer 131, which will be described later (refer to FIGS. 11 and 12). The second bonded portion 130 including the fourth gas barrier layer 132 may be defined as a second gas barrier rim portion. In an exemplary embodiment, as illustrated in FIG. 1, the electrochemical device 200 may include only the first gas barrier rim portion and the second gas barrier rim portion may be omitted. However, exemplary embodiments are not limited thereto. According to an alternative exemplary embodiment, as will be described later, the electrochemical device 200 may include at least one of the first gas barrier rim portion and the second gas barrier rim portion. In such an embodiment, the first gas barrier rim portion is defined as the first bonded portion 120 including the third gas barrier layer 122, and any repetitive detailed description of the first gas barrier rim portion will be omitted.

In an exemplary embodiment, the first packing film 101 and the second packing film 102 may be integrally formed as a single unitary unit. In one exemplary embodiment, for example, as shown in FIG. 1, the first packing film 101 and the second packing film 102 are integrally formed as a single unitary unit. In an exemplary embodiment, where the first packing film 101 and the second packing film 102 are integrally formed as a single unitary unit, a first edge on a right side of the first packing film 101 in the width direction and a first edge on a right side of the second packing film 102 in the width direction may be integrally connected to each other. In such an embodiment, a border portion integrally connected between the first packing film 101 and the second packing film 102 may be folded in the length direction, to bond a second edge on a left side of the first packing film 101 in the width direction with a second edge on a left side of the second packing film 102 in the width direction. In an exemplary embodiment, the first edge on the right side of the first packing film 101 in the width direction and the first edge on the right side of the second packing film 102 in the width direction may be bonded to each other to form the first bonded portion 120, which is the first gas barrier rim portion, and the second edge on the left side of the first packing film 101 in the width direction and the second edge on the left side of the second packing film 102 in the width direction may be bonded to each other to form the second bonded portion 130. In such an embodiment, the third gas barrier layer 133 may continuously extend between the first gas barrier layer 101b of the first packing film 101 and the second gas barrier layer 102b of the second packing film 102.

FIG. 2 is a perspective view of the structure of the electrochemical device 200 for storing energy illustrated in FIG. 1. Referring to FIG. 2, the electrochemical device 200 may extend in the length direction. In an exemplary embodiment, the length of the electrochemical device 200 may be larger than a width of the electrochemical device 200. In an exemplary embodiment, the electrochemical device 200 may include first and second lead tabs 23 and 24 extending from an end of the length direction. The first and second lead tabs 23 and 24 may be electrically connected to the electrode assembly 10 disposed in the accommodation portion 110, and may be disposed or drawn between the first packing film 101 and the second packing film 102. In an exemplary embodiment, a sealing member 25 may further be disposed in a middle portion of the first and second lead tabs and 23 and 24, such that an area between of the first packing film 101 and the second packing film 102, in which the first and second lead tabs 23 and 24 are disposed, is effectively sealed. The sealing member 25 may include or be formed of, for example, a thermoplastic material, such as polyethylene or polypropylene, and may be bonded together with the first and second sealing layers 101a and 102a.

In an exemplary embodiment, as illustrated in FIG. 2, the electrochemical device 200 may be bendable in the direction around the axis X of the width direction. Although it is illustrated in FIG. 2 that the electrochemical device 200 is bent in overall along the length direction, only a region of the electrochemical device 200 in the length direction may be bent around the axis X of the width direction. When the electrochemical device 200 is bent along the axis X of the width direction, the first and second bonded portions 120 and 130 may be bent along the axis X of the width direction.

In an exemplary embodiment, at least one of the first packing film 101 and the second packing film 102 may be stretchable or have elasticity such that the electrochemical device 200 is allowed to be repeatedly bending. In an exemplary embodiment, where the electrochemical device 200 is partially bent only in a region in the length direction, at least one of the first and second packing films 101 and 102 may be stretchable or have elasticity only in the region in which the electrochemical device 200 is bent. FIG. 2 illustrates the electrochemical device 200 in a state in which the electrochemical device 200 is bent in a way such that a protrusion portion of the accommodation portion 110 is located inside a bent portion of the electrochemical device 200. However, the electrochemical device 200 may be bent in another way such that the protrusion portion of the accommodation portion 110 may be located outside the bent portion of the electrochemical device 200. In an exemplary embodiment, the electrochemical device 200 may be flexible so that a bending direction may be changed at least once. In such an embodiment, at least one of the first and second packing films 101 and 102 may include a material having stretchability in the at least one region in the length direction. Alternatively, the electrochemical device 200 may be substantially thin to be bendable in at least one region in the length direction or in the total sections of the length direction. In one exemplary embodiment, for example, the electrochemical device 200 may have a thickness that is less than about 1 mm, in at least one region or the total sections of the length direction.

In an exemplary embodiment, a curvature radius of the bent portion may be substantially large such that sufficient durability may be obtained against repeated bending. When the electrochemical device 200 is bent to have a very small radius of curvature, the first and second gas barrier layers 101b and 102b may be damaged in the bent position, and if the number of times in which the electrochemical device 200 is bent is increased, the likelihood of the damage may also increase. In one exemplary embodiment, for example, based on the inside of the bent portion, the radius of curvature at a region in the length direction may be in a range of about 0.2 mm to about 800 mm. Alternatively, the radius of curvature at a region in the length direction may be in a range of about 1 mm to about 400 mm. Alternatively, the radius of curvature at a region in the length direction may be in a range of about 2 mm to about 100 mm. When an electronic device implementing the electrochemical device 200 is a wearable device, which is worn on a human body, the radius of curvature may be less than about 100 mm. However, in sections irrelevant to the repeated bending, the radius of curvature may be less than about 0.2 mm or larger than about 800 mm. Such an embodiment of the electrochemical device 200 may be installed in electronic devices or electronic components, in a bent state. In an exemplary embodiment, the curvature in which the electrochemical device 200 is bent may be changed during a use of the electronic devices. According to an exemplary embodiment, the electrochemical device 200 may maintain the electrochemical performance, even if the curvature of the bent electrochemical device 200 is repeatedly changed, e.g., changed about a thousand times.

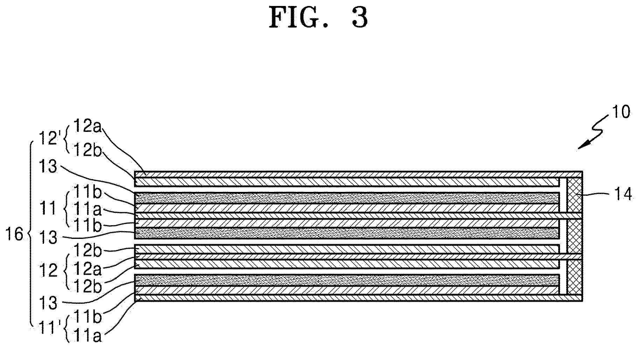

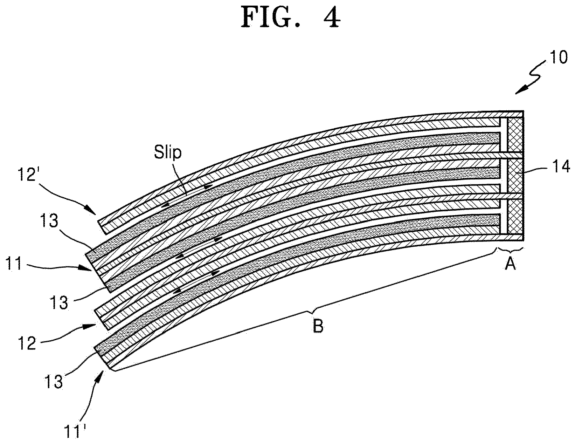

In an exemplary embodiment, the electrode assembly 10 disposed in the accommodation portion 110 may be freely bendable. FIG. 3 is a cross-sectional view of a structure of the electrode assembly 10 implemented in the electrochemical device 200 for storing energy of FIG. 1. FIG. 4 is a view of a state in which the electrode assembly 10 of FIG. 3 is bent.

Referring to FIG. 3, an exemplary embodiment of the electrode assembly 10 may include an electrode stack structure 16 and a binding member 14 that fixes an end of the electrode stack structure 16. The electrode stack structure 16 may have a structure in which a plurality of first electrode plates 11 and 11', a plurality of separators 13, and a plurality of second electrode plates 12 and 12' are stacked one on another. In an exemplary embodiment, the electrode stack structure 16 may include the plurality of first electrode plates 11 and 11' and the plurality of second electrode plates 12 and 12', which are alternately stacked one on another, and the plurality of separators 13 disposed between the plurality of first electrode plates 11 and 11' and the plurality of second electrode plates 12 and 12'. In an exemplary embodiment, the separators 13 may be bonded with the plurality of first electrode plates 11 and 11'. The first electrode plates 11 and 11', the second electrode plates 12 and 12', and the separators 13 may include a flexible sheet, and thus, the electrode stack structure 16 may be flexible. Generally, the flexibility of a material may be defined by a Young's modulus (i.e., a tensile strength) and the flexibility of a sheet may be defined by a specific flexure rigidity (= Et³/12), where E denotes a Young's Modulus and t denotes the thickness of a sheet. Herein, a material having flexibility means that the material may each independently have a Young's modulus (i.e., a tensile strength) of about 0.01 gigaPascals (GPa) to about 300 GPa, e.g., about 0.05 GPa to about 220 GPa. Herein, a sheet having flexibility means that the sheet may each independently have a specific flexure rigidity of about 1.04 x 10⁻¹⁰ newton-meter (Nm) to about 1.2 x 10⁻¹ Nm, e.g., about 8.33 x 10⁻¹⁰ Nm to about 9.75 x 10⁻³ Nm, or about 1.15 x 10⁻⁹ Nm to 2.6 x 10⁻³ Nm.

The first electrode plates 11 and 11' may include a first electrode current collector 11a and a first electrode active material layer 11b disposed on a surface of the first electrode current collector 11a. In an exemplary embodiment, in the first electrode plate 11 which is in an inner portion of the electrode stack structure 16, the first electrode active material layer 11b may be disposed or formed on both surfaces of the first electrode current collector 11a, and in the first electrode plate 11' which is in an outer portion of the electrode stack structure 16, the first electrode active material layer 11b may be disposed or formed only on a surface of the first electrode current collector 11a. In an exemplary embodiment, the second electrode plates 12 and 12' may include a second electrode current collector 12a and a second electrode active material 12b provided or formed on a surface of the second electrode current collector 12a. In an exemplary embodiment, in the second electrode plate 12 which is in an inner portion of the electrode stack structure 16, the second electrode active material layer 12b may be disposed or formed on both surfaces of the second electrode current collector 12a, and in the second electrode plate 12' which is in an outer portion of the electrode stack structure 16, the second electrode active material layer 12b may be disposed or formed only on a surface of the second electrode current collector 12a.

One of the first electrode plates 11 and 11' and the second electrode plates 12 and 12' may be positive electrode plates, and the other thereof may be negative electrode plates. In one exemplary embodiment, for example, where the first electrode plates 11 and 11' are positive electrode plates, the second electrode plates 12 and 12' may be negative electrode plates. In another alternative exemplary embodiment, where the first electrode plates 11 and 11' are negative electrode plates, the second electrode plates 12 and 12' may be positive electrode plates. In an exemplary embodiment, where the first electrode plates 11 and 11' are positive electrode plates and the second electrode plates 12 and 12' are negative electrode plates, the first electrode current collector 11a may be a positive electrode current collector, and the first electrode active material layer 11b may be a positive electrode active material layer. In such an embodiment, the second electrode current collector 12a may be a negative electrode current collector and the second electrode active material layer 12b may be a negative electrode active material layer.

In an exemplary embodiment, the positive electrode current collector may include a metal, such as aluminum, stainless steel, titanium, copper, silver or an alloy thereof, for example. In an exemplary embodiment, the positive electrode active material layer may include a positive electrode active material, a binder, and a conductive agent. In a lithium secondary battery, the positive electrode active material layer may include a material that is capable of reversibly occluding and discharging lithium ions.

The positive electrode active material may include, for example, at least one selected from lithium transition metal oxide, such as lithium cobalt oxide, lithium nickel oxide, lithium nickel cobalt oxide, lithium nickel cobalt aluminum oxide, lithium nickel cobalt manganese oxide, lithium manganese oxide, and lithium iron phosphate, nickel sulfide, copper sulfide, sulfur, iron oxide, and vanadium oxide.

The binder may include, for example, at least one selected from a polyvinylidenefluoride-based binder, such as polyvinylidenefluoride, a vinylidene fluoride/hexafluoropropylene copolymer, and a vinylidenefluoride/tetrafluoroethylene copolymer, a carboxymethylcellulose-based binder, such as natrium-carboxymethylcellulose and lithium-carboxymethylcellulose, an acrylate binder, such as polyacrylic acid, lithium-polyacrylic acid, acryl, polyacrylonitrile, polymethylmethacrylate, and polybutylacrylate, polyamideimide, polytetrafluoroethylene, polyethylene oxide, polypyrole, lithium-nafion, and a styrene butadiene rubber-based polymer.

The conductive agent may include, for example, at least one selected a carbon-based conductive agent, such as carbon black, carbon fiber, and graphite, and conductive fiber, such as metal fiber, metal powder, such as fluoride carbon powder, aluminum powder, and nickel powder, a conductive whisker, such as zinc oxide, and potassium titanate, and a conductive metal oxide, such as a titanium oxide, and a conductive polymer, such as polyphenylene derivatives.

The negative electrode current collector may include, for example, at least one selected from copper, stainless steel, nickel, aluminum, and titanium. The negative electrode active material layer may include a negative electrode active material, a binder, and a conductive agent. In a lithium secondary battery, the negative electrode active material layer may include a lithium alloy or a material capable of reversibly occluding and releasing lithium ions.

The negative electrode active material may include, for example, at least one selected from a metal, a carbon-based material, a metal oxide, and a lithium metal nitride. The metal may include, for example, at least one selected from lithium, silicon, magnesium, calcium, aluminum, germanium, tin, lead, arsenic, antimony, bismuth, silver, metal, zinc, cadmium, mercury, copper, iron, nickel, cobalt, and indium. The carbon-based material may include at least one selected from graphite, graphite, graphite carbon fiber, coke, mesocarbon microbeads ("MCMB"), polyacene, pitch-based carbon fibers, and hard carbon. The metal oxide may include one selected from lithium titanium oxide, titanium oxide, molybdenum oxide, niobium oxide, iron oxide, tungsten oxide, tin oxide, amorphous tin compound oxide, silicon monoxide, cobalt oxide, and nickel oxide. In such an embodiment, the binder and the conductive agent included in the negative electrode active material layer may be the same as the binder and the conductive agent included in the positive electrode active material layer.

The separators 13 are provided between the first electrode plates 11 and 11' and the second electrode plates 12 and 12'. The separator 13 electrically separates the first electrode plates and 11 and 11' from the second electrode plates 12 and 12'. In one exemplary embodiment, for example, the separator 13 may include a porous polymer layer, such as a polyethylene layer and a polypropylene layer, woven fabric including polymer fiber, non-woven fabric, ceramic particles, or a polymer solid electrolyte.

A surface of the separator 13 is bonded to the first electrode plates 11 and 11' (e.g., the first electrode active material layer 11b). In an exemplary embodiment, surfaces of the separators 13 are bonded to both surfaces of the first electrode plate 11 which is in the inner portion of the electrode stack structure 16, and a surface of the separator 13 is bonded to a surface (e.g., an outer surface) of the first electrode plate 11'. However, exemplary embodiments are not limited thereto. The separators 13 and the first electrode plates 11 and 11' may be bonded to each other by forming a bonding layer (not shown) on a surface of the separator 13 and bonding the first electrode plates 11 and 11' to the surface of the separator 13, on which the bonding layer is formed, by using a predetermined bonding device. In an exemplary embodiment, the separators 13 and the first electrode plates 11 and 11' may be bonded to each other, by direct bonding, such as heat-welding, rather than by using the bonding layer. A bonding area, in which the first electrode plates 11 and 11' and the separators 13 are bonded to each other, may be formed throughout a surface of the separators 13 or on a portion of a surface of the separators 13.

The binding member 14 is disposed at an end of the electrode stack structure 16. The end of the electrode stack structure 16 may be bonded by the binding member 14. The binding member 14 may be provided by using, for example, a bonding agent, or a tape spread with the bonding agent. In an exemplary embodiment, the binding member 14 may be provided by various other methods. As illustrated in FIG. 3, the binding member 14 binds an end of the first electrode plates 11 and 11' to which the separators 13 are bonded, with an end of the second electrode plates 12 and 12'. In an exemplary embodiment, as illustrated in FIG. 3, the first electrode current collector 11a of the first electrode plates 11 and 11' and the second electrode current collector 12a of the second electrode plates 12 and 12' are bonded by the binding member 14. However, exemplary embodiments are not limited thereto. In an alternative exemplary embodiment, the first electrode active material layer 11b of the first electrode plates 11 and 11' and the second electrode active material layer 12b of the second electrode plates 12 and 12' may be bonded by the binding member 14. In such an embodiment, the first electrode current collector 11a of the first electrode plates 11 and 11' and the first electrode active material layer 11b, and the second electrode current collector 12a of the second electrode plates 12 and 12' and the second electrode active material layer 12b may be bonded by the binding member 14.

In general, when the electrode stack structure 16 is not bound or not bonded to each other, relative locations of individual layers included in the electrode stack structure 16 are changed, while the electrode stack structure 16 is repeatedly bent, and thus, the arrangement may be eventually in disorder. Thus, an amount of reversible electrochemical reactions between the first electrode plates 11 and 11' and the second electrode plates 12 and 12' may be reduced, and sometimes, a short circuit may occur between the first electrode plates 11 and 11' and the second electrode plates 12 and 12'. However, in an exemplary embodiment, where an end of the electrode stack structure 16 is bound by the binding member 14 as illustrated in FIG. 3, the first electrode plates 11 and 11', the separators 13 and the second electrode plates 11 and 11' may maintain the arrangement or the relative positions thereof, and the first electrode plates 11 and 11', the separator 13 and the second electrode plates 11 and 11' may reversibly electrochemically react with one another, even if the electrode assembly 10 is bent.

Referring to FIG. 4, when the electrode assembly 10 is bent, a slip may occur between the separators 13 and the second electrode plates 12 and 12' (e.g., the second electrode active material layer 12b). In such an embodiment, since the end A of the electrode stack structure 16 is bound by the binding member 14, at the end A of the electrode stack structure 16, which is bound by the binding member 14, the slip occurs relatively less than at other parts B of the electrode stack structure 16 which is not bound. In such an embodiment, the slip occurs more at the other end of the electrode stack structure 16, which is not bound by the binding member 14, than at the end A of the electrode stack structure 16 bound by the binding member 14. Accordingly, when the electrode assembly 10 is bent, relative location changes among layers, among which the slip occurs, may be less at the end A of the electrode stack structure 16, which is bound by the binding member 14, than at the other ends B of the electrode stack structure 16, which is not bound by the binding member 14.

In an exemplary embodiment, where the first electrode plates 11 and 11' are bonded to the separator 13, the slip does not occur between the first electrode plates 11 and 11' (e.g., the first electrode active material layer 11b) and the separator 13, even when the electrode assembly 10 is bent. Accordingly, secession or grinding of the active material layers, which may occur when the slip occurs between the first electrode plates 11 and 11' and the separator 13, may be effectively prevented. In an exemplary embodiment, as described above, two first electrode plates 11 and 11' and two second electrode plates 12 and 12' may be alternately stacked. However, exemplary embodiments are not limited thereto, and the number of first electrode plates 11 and 11' and the number of second electrode plates 12 and 12' may vary.

FIGS. 3 and 4 illustrate the structure of an exemplary embodiment of the repeatedly bendable electrode assembly 10. In an exemplary embodiment, the accommodation portion 110 in which the electrode assembly 10 is disposed may not be bent, and the electrochemical device 200 may have a structured in which other parts except the accommodation portion 110 are bent. In such an embodiment, the structure of the electrode assembly 10 may not be limited to the structure illustrated in FIGS. 3 and 4. In one exemplary embodiment, for example, the electrode assembly 10 may be a general jelly-roll type or a stack-type electrode assembly.

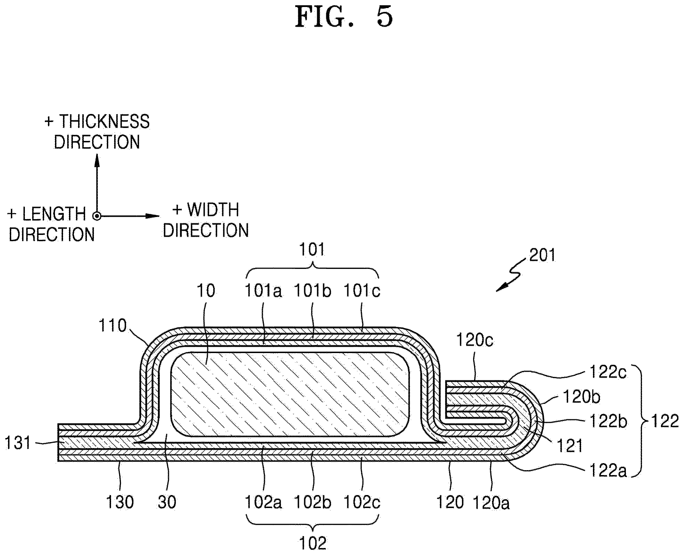

FIG. 5 is a cross-sectional view of a structure of an electrochemical device 201 for storing energy, according to an alternative exemplary embodiment.

The electrochemical device 201 of FIG. 5 is substantially the same as the electrochemical device 200 of FIG. 1 except that the first packing film 101 and the second packing film 102 are separately formed, and the first bonded portion 120, which is the first gas barrier rim portion, is folded. In such an embodiment, the first gas barrier layer 101b and the second gas barrier layer 102b are separated or disconnected from each other. In such an embodiment, the first outer insulating layer 101c and the second outer insulating layer 102c are separated or disconnected from each other. In one exemplary embodiment, for example, the first bonded portion 120 may include a first portion 120a extending from a side surface of the accommodation portion 110 in the width direction, a second portion 120b continuously extending from the first portion 120a and bent by about 180 degrees, and a third portion 120c continuously extending from the second portion 120b in the width direction and opposite to the first portion 120a. In such an embodiment, as illustrated in FIG. 5, the second portion 120b of the first bonded portion 120 may be folded from the first portion 120a toward a protrusion direction of the accommodation portion 110 so that the third portion 120c of the first bonded portion 120 extend in the direction to the accommodation portion 110. In an exemplary embodiment, a thickness of the first bonded portion 120 may be in a range of about 0.03 mm to about 1.2 mm to allow the first bonded portion 120 to be effectively foldable. If the thickness of the first bonded portion 120 is less than 0.03 mm, the strength of the first bonded portion 120 becomes low, and thus, damage may occur when the first bonded portion 120 is folded. If the thickness of the first bonded portion 120 is larger than 1.2 mm, stress is excessively concentrated, and thus, damage may occur.

As described above, the first bonded portion 120 is folded, such that the third gas barrier layer 122 which is in the first bonded portion 120 may be disposed to surround the first bonded sealing layer 121 at an end of the width direction of the first bonded sealing layer 121. In one exemplary embodiment, for example, the third gas barrier layer 122 may include a bottom portion 122a and an upper portion 122c, which are parallel to the first bonded sealing layer 121 and disposed at different heights from each other, and a middle portion 122b continuously extending between the bottom portion 122a and the upper portion 122c and curved to surround the end of the width direction of the first bonded sealing layer 121. In such an embodiment, the third gas barrier layer 122 may be a portion of the second gas barrier layer 102b, and at the first portion 120a of the first bonded portion 120, the third gas barrier layer 122 may continuously extend from the second gas barrier layer 102b.

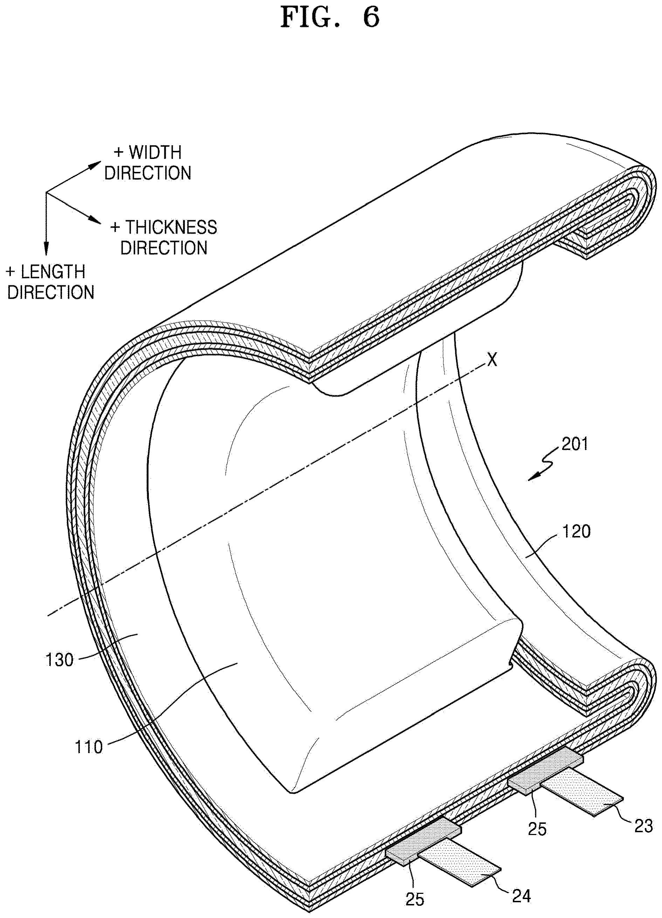

FIG. 6 is a perspective view of the structure of the electrochemical device 201 for storing energy illustrated in FIG. 5. Referring to FIG. 6, the electrochemical device 201 may extend in the length direction. In such an embodiment, like the electrochemical device 200 of FIG. 2, the electrochemical device 201 of FIG. 6 may be bendable around an axis X of the width direction. When the electrochemical device 201 is bent, the first and second bonded portions 120 and 130 may also be bent around the axis X of the width direction. In such an embodiment, when the first bonded portion 120 is bent around the axis X of the width direction, in a state in which the first bonded portion 120 is folded round an axis in the length direction, as illustrated in FIG. 5, the air tightness of the electrochemical device 201 may further be increased.

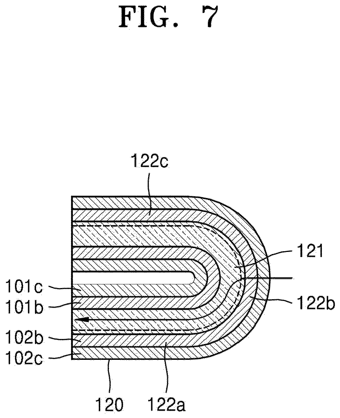

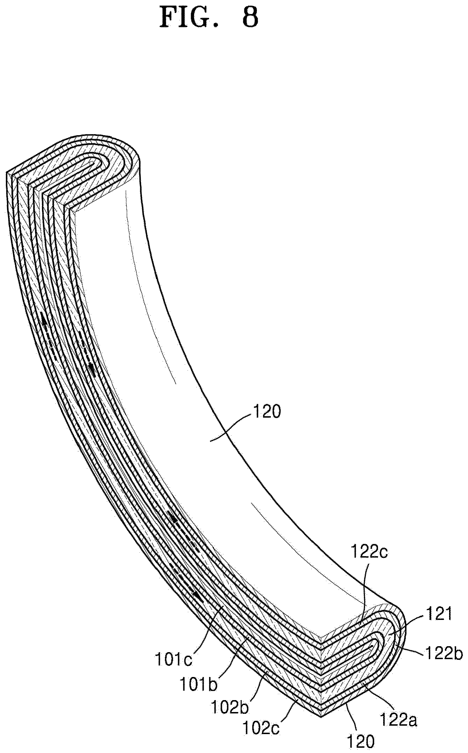

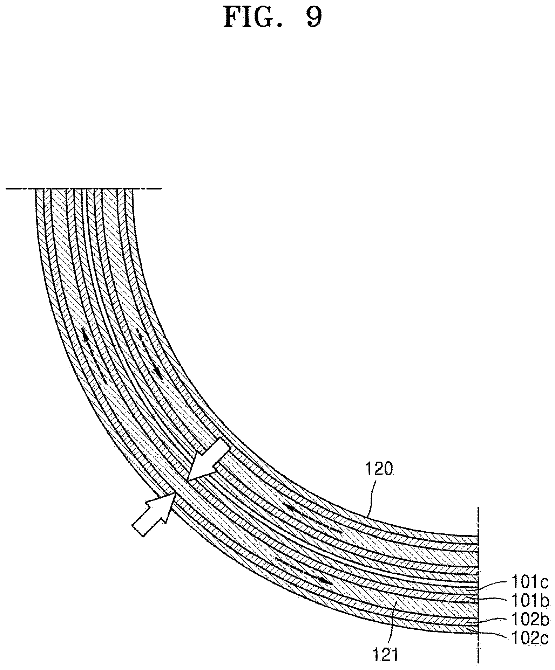

FIG. 7 is a cross-sectional view of a front surface of the first bonded portion 120 of the electrochemical device 201 for storing energy of FIG. 5. FIG. 8 is a perspective view showing a partial section of the first bonded portion 120 of the electrochemical device 201 for storing energy of FIG. 5. FIG. 9 is a cross-sectional view of a side surface of the first bonded portion 120 of the electrochemical device 201 for storing energy of FIG. 5. Here, the first bonded portion 120 illustrated in FIGS. 7 through 9 correspond to the first gas barrier rim portion.

Referring to FIG. 7, the third gas barrier layer 122 may be disposed substantially close to a neutral plane indicated by a dotted line, when the first bonded portion 120 is folded. Here, the neutral plane is a border between an inner portion in which retraction occurs when the first bonded portion 120 is folded, and an outer portion in which tension occurs when the first bonded portion 120 is folded. The neutral plane is an area in which the stress is the least. Accordingly, in such an embodiment, thicknesses of the first and second outer insulating layers 101c and 102c, the first and second gas barrier layers 101b and 102b, and the first bonded sealing layer 121 may be appropriately adjusted. Since the third gas barrier layer 122 is disposed substantially close to the neutral plane in the thickness direction, the change of or the stress in the third gas barrier layer 122 may become effectively less or be restrained to be substantially small, even when the first bonded portion 120 is bent. Thus, the possibility that a portion of the third gas barrier layer 122 is damaged by the bending, thereby generating a pin hole, may be reduced, and even if the pin hole is generated, a size of the pin hole may be effectively minimized. In such an embodiment, even if the pin hole is generated in the middle portion 122b of the third gas barrier layer 122 where the bending is most intense, the air tightness of the electrochemical device 201 may be maintained to be effectively high, because gas molecules have to completely pass through an inner path of the first bonded sealing layer 121 extending in the width direction, as indicated by an arrow, to reach the inside of the accommodation portion 110. When the pin hole is not generated, the path that the gas molecules have to pass through becomes longer, since the first bonded sealing layer 121 is surrounded by the third gas barrier layer 122.

In such an embodiment, referring to FIGS. 8 and 9, when the first bonded portion 120 is bent in the length direction, that is, the first bonded portion 120 is curved around the axis X of the width direction, retraction is generated in a curved inner portion of the first bonded portion 120, and tension is generated in an outer portion of the first bonded portion 120, as indicated by four arrows. However, since the inner portion and the outer portion are connected to each other by the third gas barrier layer 122, lengths of the inner portion and the outer portion tend to maintain the same value. Due to such opposite forces, the curved inner portion and the outer portion tend to be in close contact with each other. As a result, compression is generated in the first bonded sealing layer 121 in the thickness direction. Thus, widening of the bonded portion of the first bonded sealing layer 121 may be effectively prevented, and even if the bonding strength of the first bonded sealing layer 121 is not high, the low strength of the first bonded sealing layer 121 may be compensated for. Accordingly, the air tightness of the electrochemical device 201 according to the exemplary embodiment may further be improved.

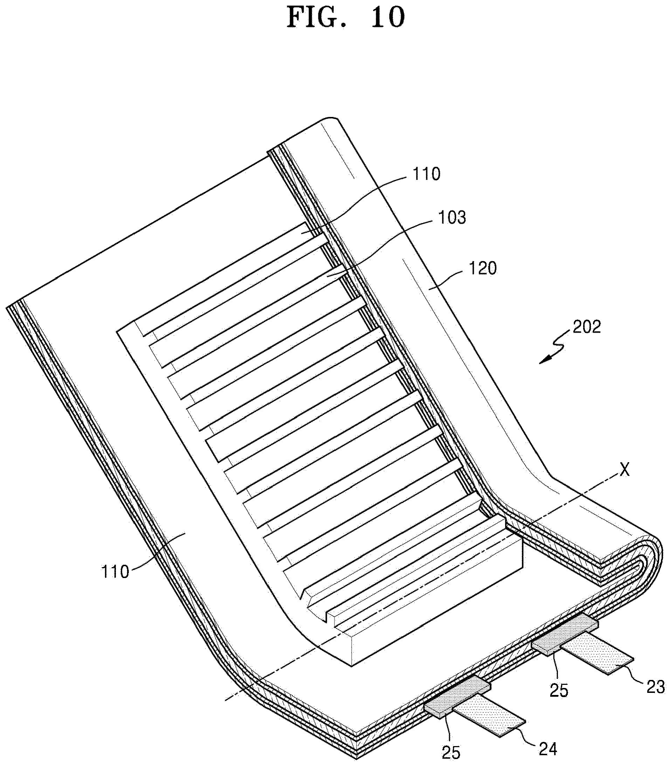

FIG. 10 is a perspective view of a structure of an electrochemical device 202 for storing energy, according to another alternative exemplary embodiment.

Referring to FIG. 10, the electrochemical device 202 may have a plurality of concavo-convex shapes or wrinkle shapes to have stretchability or elasticity to be repeatedly bendable. In one exemplary embodiment, for example, at least one of the first gas barrier layer 101 and the second gas barrier layer 102 of the electrochemical device 202 may have the plurality of concavo-convex shapes or the wrinkle structure 103 disposed in the length direction. FIG. 10 illustrates an embodiment, where the concavo-convex shapes or the wrinkle structures 103 are defined or formed only on an upper surface of the accommodation portion 110, in the first gas barrier layer 101. However, exemplary embodiments are not limited thereto. In one alternative exemplary embodiment, for example, the concavo-convex shapes or the winkle structures 103 may also be formed on a side surface of the accommodation portion 110. Also, the concavo-convex shapes or the wrinkle structures 103 may be defined on a bottom surface of the second gas barrier layer 102. In an exemplary embodiment, where the concavo-convex shapes or the winkle structures 103 are defined as described above, the electrochemical device 202 may be partially bent only in an area thereof, along the length direction, or may be bent in overall areas, along the length direction.

FIG. 11 is a perspective view of a structure of an electrochemical device 203 for storing energy, according to another alternative exemplary embodiment. FIG. 12 is a cross-sectional view of the structure of the electrochemical device 203 for storing energy illustrated in FIG. 11.

The electrochemical device 203 illustrated in FIGS. 11 and 12 is substantially the same as the electrochemical device 201 illustrated in FIGS. 5 and 6 except that the first packing film 101 and the second packing film 102 are integrally formed as a single unitary unit. In one exemplary embodiment, for example, a second edge on a left side of the first packing film 101 in the width direction may be integrally connected with a second edge on a left side of the second packing film 102 in the width direction. In such an embodiment, a border portion which is integrally connected between the first packing film 101 and the second packing film 102 may be folded along the length direction, to bond a first edge on a right side of the first packing film 101 in the width direction and a first edge on a right side of the second packing film 102 in the width direction. In such an embodiment, the first edge on the right side of the first packing film 101 in the width direction and the first edge on the right side of the second packing film 102 in the width direction may be bonded to each other to form the first bonded portion 120, and the second edge on the left side of the first packing film 101 in the width direction and the second edge on the left side of the second packing film 102 in the width direction may be bonded to each other to form the second bonded portion 130.

The first bonded portion 120 of the electrochemical device 203 may have the same structure as the first bonded portion 120 of the electrochemical device 201 of FIG. 5, and the second bonded portion 130 of the electrochemical device 203 may have the same structure as the first bonded portion 120 of the electrochemical device 200 of FIG. 1. Thus, the first bonded portion 120 of the electrochemical device 203 defines the first gas barrier rim portion having the third gas barrier layer 122, and the second bonded portion 130 defines the second gas barrier rim portion having the fourth gas barrier layer 132. In one exemplary embodiment, for example, in the second bonded portion 130 of the electrochemical device 203, at an end of the second bonded sealing layer 131 in the width direction, the fourth gas barrier layer 132 surrounding the second bonded sealing layer 131 may be located. The fourth gas barrier layer 132 may have a bottom portion 132a and an upper portion 132c parallel to the second bonded sealing layer 131 and disposed at different heights from each other, and a middle portion 132b continuously extending between the bottom portion 132a and the upper portion 132c and curved to surround the end of the second bonded sealing layer 131 in the width direction. The fourth gas barrier layer 132 may continuously extend between the first gas barrier layer 101b of the first packing film 101 and the second gas barrier layer 102b of the second packing film 102.

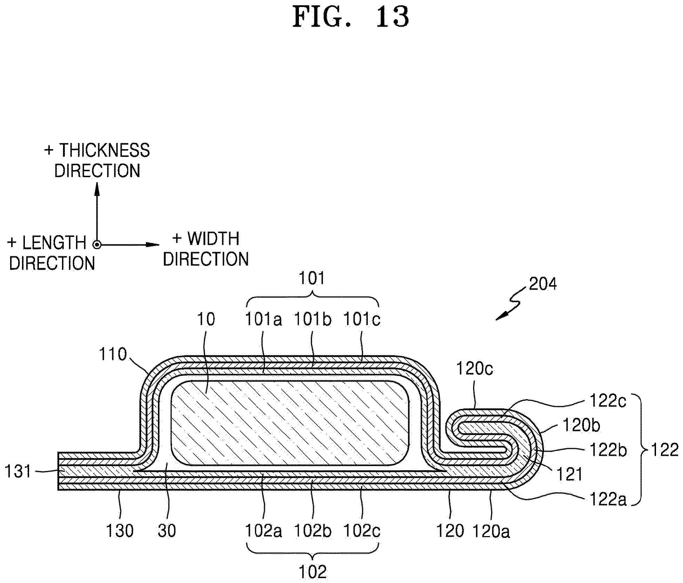

FIG. 13 is a cross-sectional view of a structure of an electrochemical device 204 for storing energy, according to another alternative exemplary embodiment.

Referring to FIG. 13, in an exemplary embodiment, the first packing film 101 and the second packing film 102 of the electrochemical device 204 are integrally formed as a single unitary unit. The electrochemical device 204 of FIG. 13 is substantially the same as the electrochemical device 200 of FIG. 1 except that the first bonded portion 120 is folded. Also, the electrochemical device 204 of FIG. 13 is substantially the same as the electrochemical device 203 of FIG. 12 except that the border portion integrally connected between the first packing film 101 and the second packing film 102 is located in the first bonded portion 120. Thus, the third gas barrier layer 122 of the first bonded portion 120 may continuously extend between the first gas barrier layer 101b of the first packing film 101 and the second gas barrier layer 102b of the second packing film 102. In an exemplary embodiment, as illustrated in FIG. 13, the first bonded portion 120 defines the first gas barrier rim portion, but the second bonded portion 130 is not corresponding to the second gas barrier rim portion.

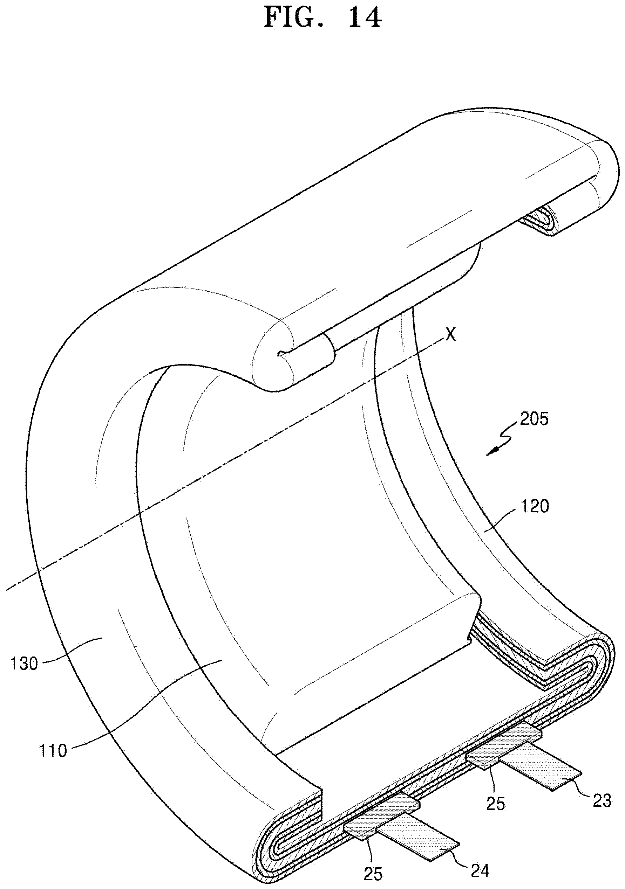

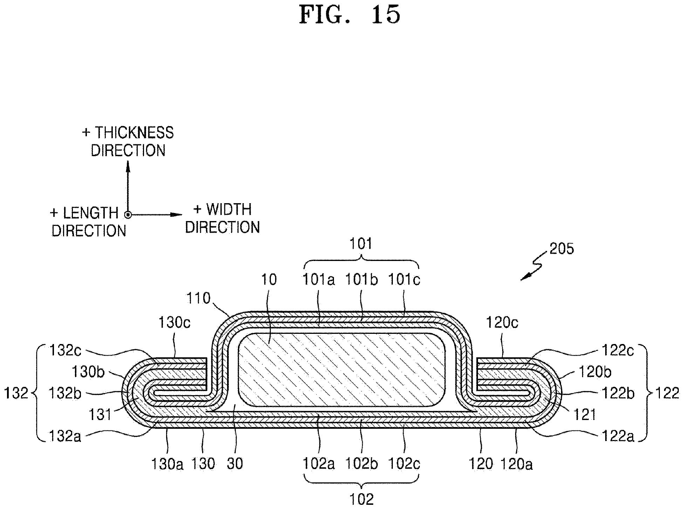

FIG. 14 is a perspective view of a structure of an electrochemical device 205 for storing energy, according to another alternative exemplary embodiment. FIG. 15 is a cross-sectional view of the structure of the electrochemical device 205 for storing energy illustrated in FIG. 14.

Referring to FIG. 14, the first packing film 101 and the second packing film 102 of the electrochemical device 205 are integrally formed. In exemplary embodiments described above, in which the first packing film 101 and the second packing film 102 are integrally formed as a single unitary unit, the border portion integrally connected between the first packing film 101 and the second packing film 102 is located along the first bonded portion 120 or the second bonded portion 130, and the fist packing film 101 and the second packing film 102 are folded with the length direction as an axis. In an alternative exemplary embodiment, as illustrated in FIGS. 14 and 15, the border portion integrally connected between the first packing film 101 and the second packing film 102 may be located at an end in the length direction. In such an embodiment, the first packing film 101 and the second packing film 102 may be folded along an axis in the width direction. In one exemplary embodiment, for example, the first edge of the first packing film 101 in the length direction and the first edge of the second packing film 102 in the length direction may be integrally connected with each other. In such an embodiment, the portion integrally connected between the first packing film 101 and the second packing film 102 may be folded along the width direction so that the second edge of the first packing film 101 in the length direction and the second edge of the second packing film 102 in the length direction are bonded to each other.

In such an embodiment, since the border portion integrally connected between the first packing film 101 and the second packing film 102 is located at the end in the length direction, the first packing film 101 and the second packing film 102 may be seen to be separated from each other at the ends of the first and second bonded portions 120 and 130 in the width direction, as shown in FIG. 15. According to an exemplary embodiment, both of the first and second bonded portions 120 and 130 may be folded. Thus, the first bonded portion 120 may include a first portion 120a extending from a side surface of the accommodation portion 110 in the width direction, the second portion 120b continuously extending from the first portion 120a and is bent by about 180 degrees, and the third portion 120c continuously extending from the second portion 120b in the width direction and facing the first portion 120a. In such an embodiment, the second bonded portion 130 may include a first portion 130a extending from the side surface of the accommodation portion 110 in the width direction, a second portion 130b continuously extending from the first portion 130a and bent by about 180 degrees, and a third portion 130c continuously extending from the second portion 130b in the width direction and facing the first portion 130a. In such an embodiment, since the electrochemical device 205 includes both the third gas barrier layer 122 and the fourth gas barrier layer 132, the first bonded portion 120 defines the first gas barrier rim portion and the second bonded portion 130 defines the second gas barrier rim portion.

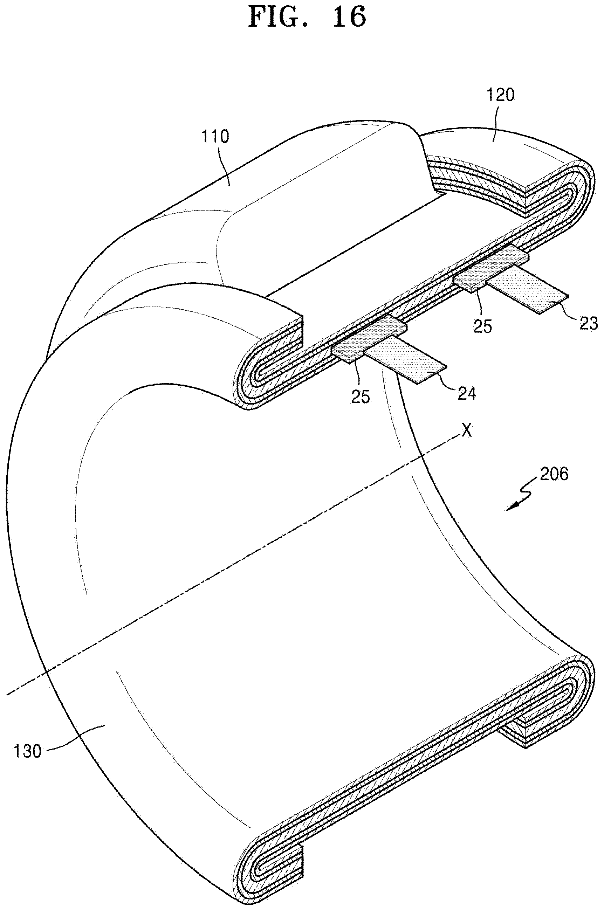

FIG. 16 is a perspective view of a structure of an electrochemical device 206 for storing energy, according to another alternative exemplary embodiment.

In exemplary embodiments described above, the electrochemical device 200 through 205 may be curved in a way such that the protrusion portion of the accommodation portion 110 is located in the inside. However, referring to FIG. 16, the electrochemical device 206 may be curved around an axis X of the width direction in a way such that the protrusion portion of the accommodation portion 110 is located in the outside.

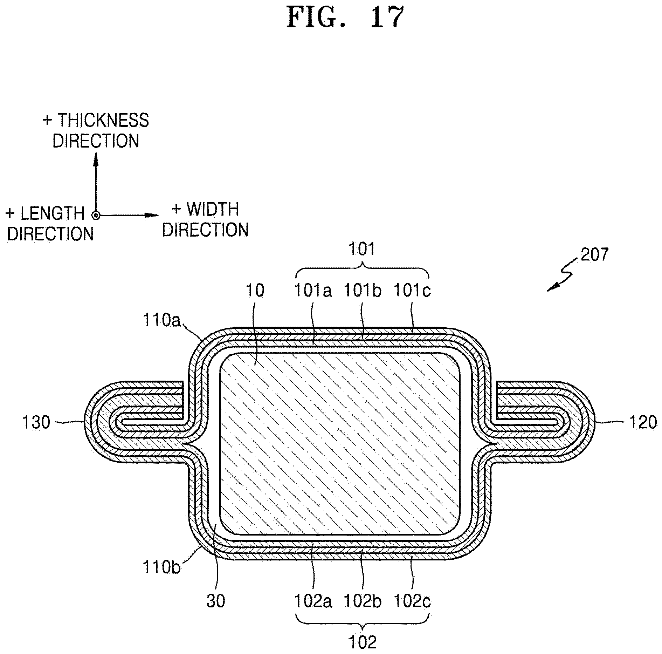

FIG. 17 is a cross-sectional view of a structure of an electrochemical device 207 for storing energy, according to another alternative exemplary embodiment.

In exemplary embodiments described above, the accommodation portion 110 protrudes in a positive (+) thickness direction from the first packing film 101. However, the location of the accommodation portion 110 is not limited thereto. In one exemplary embodiment, for example, as shown in FIG. 17, the accommodation portion 110 may include a first accommodation portion 110a protruding from the first packing film 101 in the positive (+) thickness direction, and a second accommodation portion 110b protruding from the second packing film 102 in the negative (-) thickness direction.

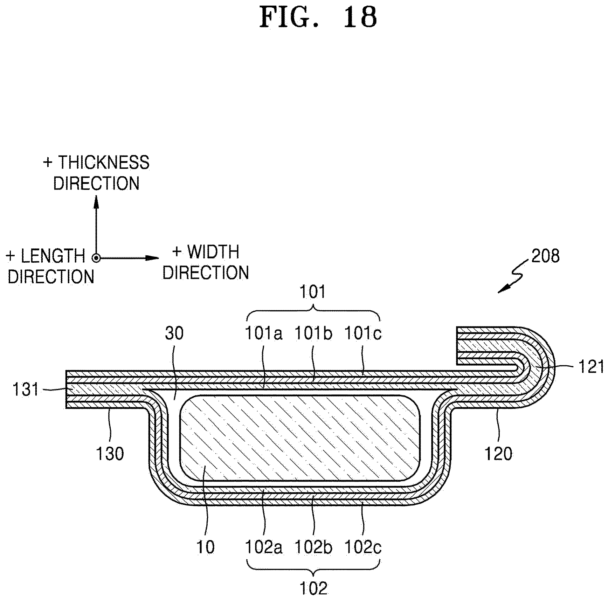

FIG. 18 is a cross-sectional view of a structure of an electrochemical device 208 for storing energy, according to another alternative exemplary embodiment.

Referring to FIG. 18, in an exemplary embodiment, the accommodation portion 110 may protrude from the second packing film 102 in a negative (-) thickness direction. In such an embodiment, the first boding portion 120 may be folded in a direction opposite to the protrusion direction of the accommodation portion 110. In such an embodiment, the first bonded portion 120 may be bent toward a positive (+) thickness direction. In such an embodiment, the accommodation portion 110 may protrude from the first packing film 101 in the positive (+) thickness direction and the first bonded portion 120 may bent toward the negative (-) thickness direction.

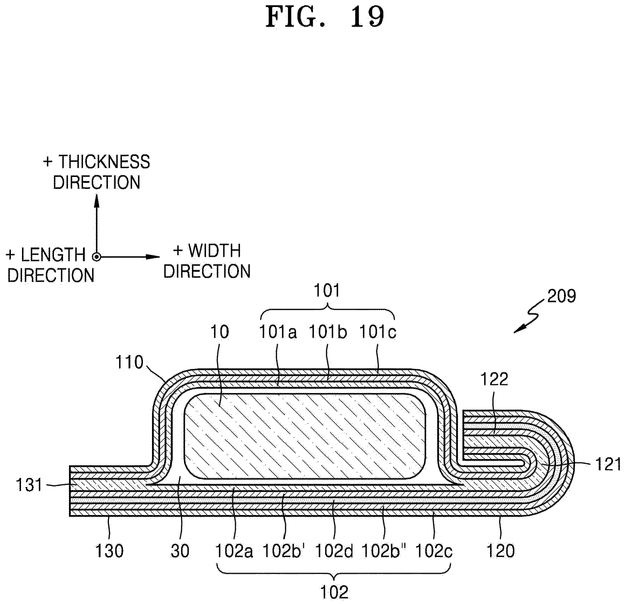

FIG. 19 is a cross-sectional view of a structure of an electrochemical device 209 for storing energy, according to another alternative exemplary embodiment.

Referring to FIG. 19, in an exemplary embodiment, the second gas barrier layer 102b of the second packing film 102 may have a multi-layered structure including a plurality of layers. In one exemplary embodiment, for example, the second gas barrier layer 102b may include an inner gas barrier layer 102b', an outer gas barrier layer 102b", and a middle layer 102d. The middle layer 102d may be disposed between the inner gas barrier layer 102b' and the outer gas barrier layer 102b", and may include or be formed of a polymer material. The inner gas barrier layer 102b' and the outer gas barrier layer 102b" may include or be formed of the same material as each other or different materials from each other. In such an embodiment, as described above, the inner gas barrier layer 102b' and the outer gas barrier layer 102b" may include or be formed of a metal foil, an inorganic material layer of a plate shape, or a polymer material having a low gas transmittance. The third gas barrier layer 122 surrounding the first bonded sealing layer 121 in the first bonded portion 120 may continuously extend from the inner gas barrier layer 102b'. FIG. 19 illustrates an exemplary embodiment, where only the second gas barrier layer 102b of the second packing film 102 has a multi-layered structure, but not being limited thereto. In an alternative exemplary embodiment, the first gas barrier layer 101b of the first packing film 101 may also have the multi-layered structure.

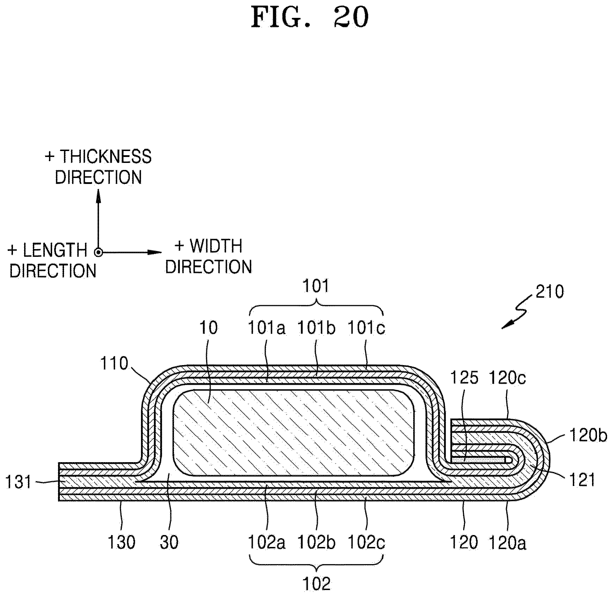

FIG. 20 is a cross-sectional view of a structure of an electrochemical device 210 for storing energy, according to another alternative exemplary embodiment.

Referring to FIG. 20, in an exemplary embodiment, the first bonded portion 120 may be folded in a way such that the third portion 120c of the first bonded portion 120 faces a side surface of the accommodation portion 110. Here, the third portion 120c faces the first portion 120a extending from the side surface of the accommodation portion 110 in the width direction. In such an embodiment, the electrochemical device 210 may further include a bonding member 125 disposed between the first portion 120a and the third portion 120c facing each other. The bonding member 125 may bond the first portion 120a and the third portion 120c so that the first portion 120a and the third portion 120c are not separated from each other. Thus, even when the electrochemical device 210 is repeatedly bent, the first bonded portion 120 may maintain a folded state and may not be straightened, by the bonding member 125. The bonding member 125 may include or be formed of a material having predetermined air tightness, like the first and second sealing layers 101a and 102a. Alternatively, the bonding member 125 may include or be formed of a material having low air tightness, like a pressure sensitive adhesive.

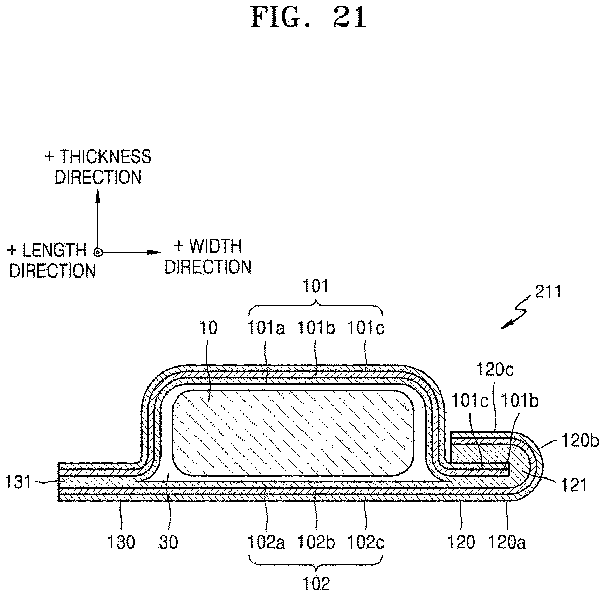

FIG. 21 is a cross-sectional view of a structure of an electrochemical device 211 for storing energy, according to another alternative exemplary embodiment.

In an exemplary embodiment, as illustrated in FIG. 20, when the first portion 120a and the third portion 120c of the first bonded portion 120 are bonded to each other, outermost surfaces of the first packing film 101 may be bonded to each other. In one exemplary embodiment, for example, the first outer insulating layer 101c of the first packing film 101 is bent by about 180 degrees and bonded to an upper surface and a lower surface of the bonding member 125. In an alternative exemplary embodiment, the first bonded sealing layer 121 may be bonded to an outermost surface of the first packing film 101, as illustrated in FIG. 21. In one exemplary embodiment, for example, the first bonded sealing layer 121 may be bonded to the first outer insulating layer 101c of the first packing film 101. In such an embodiment, a portion of the first outer insulating layer 101c and a portion of the first gas barrier layer 101b may be removed in the third portion 120c of the first bonded portion 120 so that the first outer insulating layer 101c and the first gas barrier layer 101b are not folded when the first bonded portion 120 is folded. In such an embodiment, the first bonded sealing layer 121 may be directly bonded to the outermost surface of the first packing film 101, without the bonding member 125. In such an embodiment, in the third portion 120c of the first bonded portion 120, the bonding member 125 may further be disposed between the first outer insulating layer 101c and the first bonded sealing layer 121.

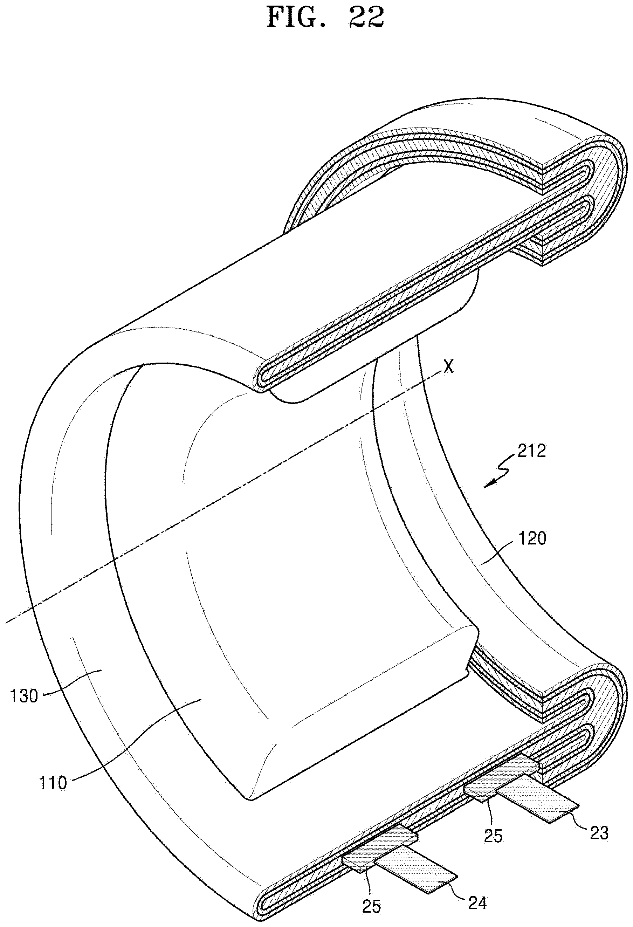

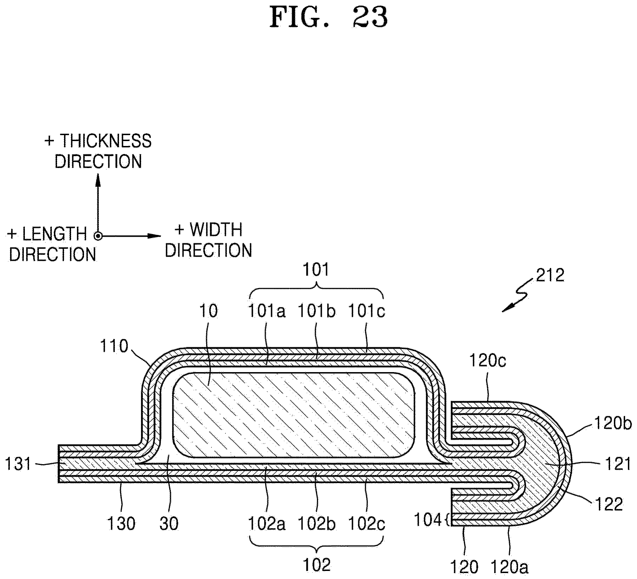

FIG. 22 is a perspective view of a structure of an electrochemical device 212 for storing energy, according to another alternative exemplary embodiment. FIG. 23 is a cross-sectional view of the structure of the electrochemical device 212 for storing energy illustrated in FIG. 22.

Referring to FIGS. 22 and 23, the first bonded portion 120 of the electrochemical device 212 may be bent in both positive (+) and negative (-) thickness directions. In one exemplary embodiment, for example, the first bonded portion 120 may include the first portion 120a bent in the negative thickness direction to face the second packing film 102, the third portion 120c bent in the positive thickness direction to face the first packing film 101, and the second portion 120b continuously extending between the first portion 120a and the third portion 120c. Thus, the first portion 120a and the third portion 120c may be bent in opposite directions.

In such an embodiment, a packing member of the electrochemical device 212 may further include a third packing film 104, separated from the first and second packing films 101 and 102. As illustrated in FIG. 23, the third packing film 104 separated from the first and second packing films 101 and 102 may be disposed along an outer surface of the first bonded portion 120 to surround the first bonded sealing layer 121. The third packing film 104 may include a gas barrier layer and a sealing layer, like the first and second packing films 101 and 102. The gas barrier layer of the third packing film 104 may be bonded to the first sealing layer 101a and the second sealing layer 102a to form the third gas barrier layer 122 contacting the first bonded sealing layer 121. In the first bonded portion 120, the third gas barrier layer 122 may extend from the negative (-) thickness direction to the positive (+) thickness direction to completely surround the first bonded sealing layer 121. The third gas barrier layer 122 may not be connected with the first gas barrier layer 101b of the first packing film 101 and the second gas barrier layer 102b of the second packing film 102, and may be separately formed.

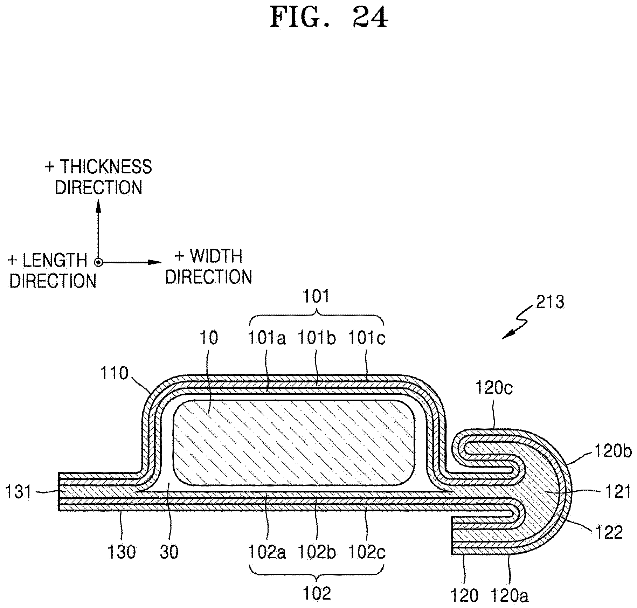

FIG. 24 is a cross-sectional view of a structure of an electrochemical device 213 for storing energy, according to another alternative exemplary embodiment.

The electrochemical device 213 of FIG. 24 is substantially the same as the electrochemical device 212 of FIG. 23 except that the electrochemical device 213 of FIG. 24 does not include the additional third packing film 104, and in the electrochemical device 213 of FIG. 24, the first packing film 101 continuously extends to the first through third portions 120a, 120b, and 120c of the first bonded portion 120 to form an outer surface of the first bonded portion 120. In such an embodiment, the second packing film 102 partially extends to the first portion 102a, and the second gas barrier layer 102b and the outer insulating layer 102c of the second packing film 102 may be bent in a negative (-) thickness direction.

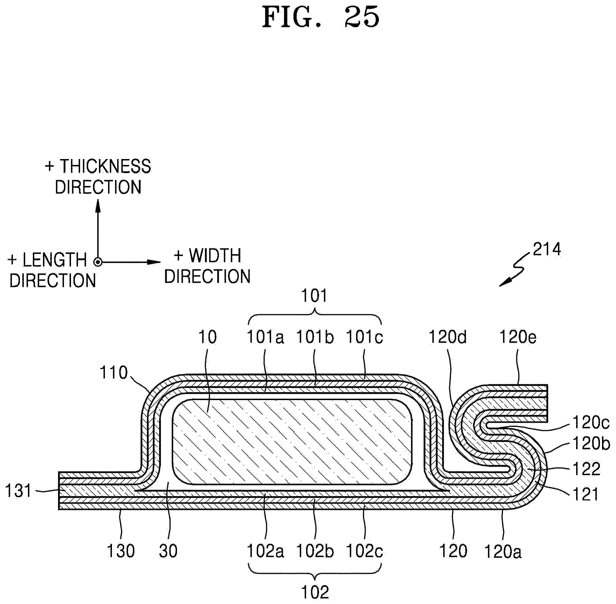

FIG. 25 is a cross-sectional view of a structure of an electrochemical device 214 for storing energy, according to another alternative exemplary embodiment.

Referring to FIG. 25, in an exemplary embodiment, the first bonded portion 120 of the electrochemical device 214 may further include additional portions extending from the third portion 120c which is bent toward the accommodation portion 110. In one exemplary embodiment, for example, the first bonded portion 120 may include the first portion 120a extending from a side surface of the accommodation portion 110 in the width direction, the second portion 120b continuously extending from the first portion 120a and bent by about 180 degrees, the third portion 120c continuously extending from the second portion 120b in the width direction and facing the first portion 120a, a fourth portion 120d continuously extending from the third portion 120c and additionally bent in the opposite width direction to the second portion 120b, and a fifth portion 120e continuously extending from the fourth portion 120d and parallel to the first and third portions 120a and 120c.

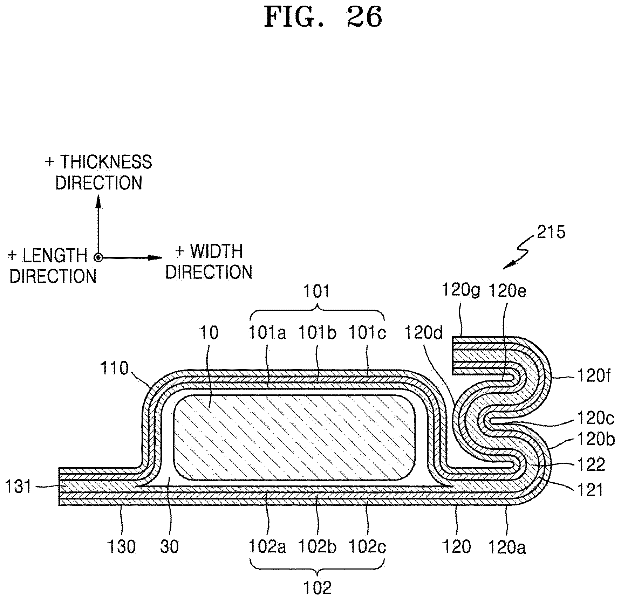

FIG. 26 is a cross-sectional view of a structure of an electrochemical device 215 for storing energy, according to another alternative exemplary embodiment.

Referring to FIG. 26, the first bonded portion 120 of the electrochemical device 215 may further include additional portions continuously extending from the fifth portion 120e. In one exemplary embodiment, for example, the first bonded portion 120 may include the first portion 120a extending from a side surface of the accommodation portion 110 in the width direction, the second portion 120b continuously extending from the first portion 120a and bent by about 180 degrees, the third portion 120c continuously extending from the second portion 120b in the width direction and facing the first portion 120a, the fourth portion 120d continuously extending from the third portion 120c and additionally bent in the opposite width direction to the second portion 120b, the fifth portion 120e continuously extending from the fourth portion 120d and parallel to the first and third portions 120a and 120c, a sixth portion 120f continuously extending from the fifth portion 120e and bent in the same direction as the second portion 120b, and a seventh portion 120g continuously extending from the sixth portion 120f toward the accommodation portion 110 and parallel to the first, third, and fifth portions 120a, 120c, and 120e. In an exemplary embodiment, as shown in FIGS. 25 and 26, the first bonded portion 120 may be repeatedly bent and may be stacked in a positive (+) height direction.

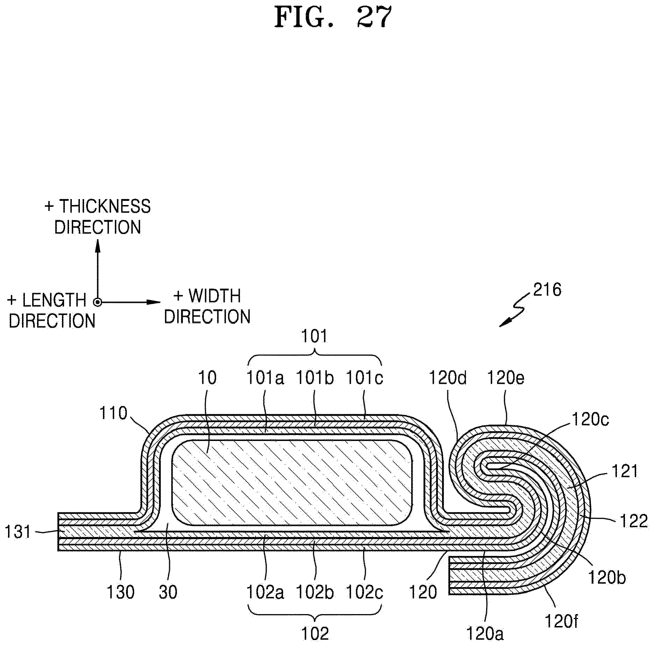

FIG. 27 is a cross-sectional view of a structure of an electrochemical device 216 for storing energy, according to another alternative exemplary embodiment.

In an exemplary embodiment, as illustrated in FIG. 27, the first bonded portion 120 of the electrochemical device 216 may further include additional portions which continuously extend from the third portion 120c to surround other portions of the first bonded portion 120. In one exemplary embodiment, for example, the first bonded portion 120 may include the first portion 120a extending from a side surface of the accommodation portion 110 in the width direction, the second portion 120b continuously extending from the first portion 120a and bent by about 180 degrees, the third portion 120c continuously extending from the second portion 120b in the width direction and facing the first portion 120a, the fourth portion 120d continuously extending from the third portion 120c and bent in the opposite width direction to the second portion 120b, the fifth portion 120e continuously extending from the fourth portion 120d and parallel to the first and third portions 120a and 120c, and the sixth portion 120f continuously extending from the fifth portion 120e and bent to surround the first and second portions 120a and 120b.

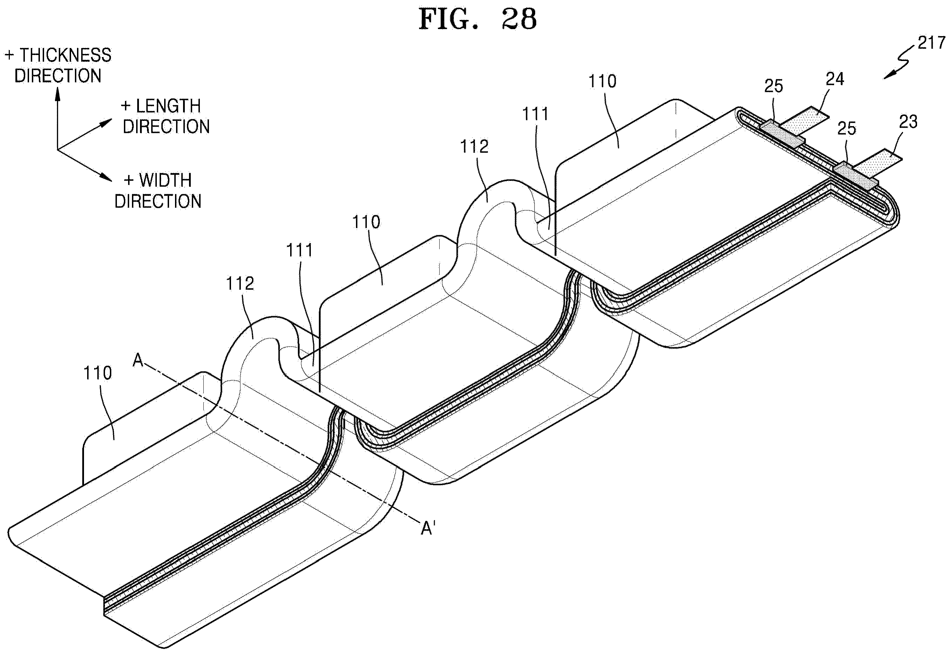

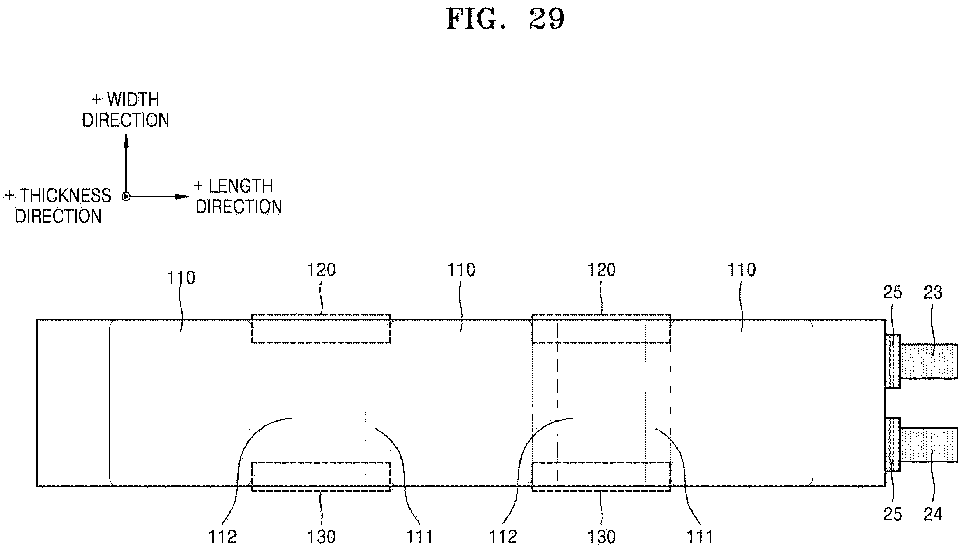

FIG. 28 is a perspective view of a structure of an electrochemical device 217 for storing energy, according to an exemplary embodiment of the invention. FIG. 29 is a plan view of the structure of the electrochemical device 217 for storing energy illustrated in FIG. 28.

Referring to FIGS. 28 and 29, in an exemplary embodiment of the invention, a packing member of the electrochemical device 217 includes a plurality of accommodation portions 110 disposed in a length direction, and a connection portion 111 connecting between two adjacent accommodation portions 110. The electrode assembly 10 is disposed for each accommodation portion 110, and thus, the electrochemical device 217 includes a plurality of electrode assemblies 10 disposed apart from one another in the length direction. FIGS. 28 and 29 illustrate an exemplary embodiment of the invention, with three accommodation portions 110 and two connection portions 111. However, exemplary embodiments of the invention are not limited thereto. In one alternative exemplary embodiment of the invention, for example, the electrochemical device 217 may include only two accommodation portions 110 or may include four or more accommodation portions 110.

The plurality of accommodation portions 110 may have a predetermined thickness to provide a space to accommodate the electrode assembly 10 and the electrolyte 30. The connection portion 111 may have a smaller thickness than the plurality of accommodation portions 110. The electrochemical device 217 may be easily bent in the connection portion 111 since the thickness of the connection portion 111 is substantially small. Here, the thickness of the connection portion 111 may be defined as a maximum distance between the first packing film 101 and the second packing film 102, which is measured in a state in which the connection portion 111 is straightened to be flat. In one exemplary embodiment, for example, the thickness of the accommodation portion 110 may be about two times larger than the thickness of the connection portion 111.

In an exemplary embodiment of the invention for the electrochemical device 217, the first and second boding portions 120 and 130 may not be formed on both side surfaces of the accommodation portion 110 in the width direction. In such an embodiment, the packing member of the electrochemical device 217 may be formed such that a left side edge of the accommodation portion 110 in the width direction corresponds to a border portion integrally connected between the first packing film 101 and the second packing film 102. In such an embodiment, the first bonded portion 120 may be bent in a negative (-) thickness direction with a right side edge of the accommodation portion 110 in the width direction as an axis. Thus, as indicated by a dotted box in FIG. 29, the first and second bonded portions 120 and 130 may be defined or formed only in the connection portion 111 between the accommodation portions 110. In such an embodiment, at least two first and second bonded portions 120 and 130 may be discontinuously disposed in the length direction, where the first and second bonded portions 120 and 130 may not be formed in the accommodation portion 110 which has a larger thickness, and may be formed only in the accommodation portion 110 which has a smaller thickness. In such an embodiment, the first and second bonded portions 120 and 130 may be bent in the connection portion 111 around an axis of the width direction.

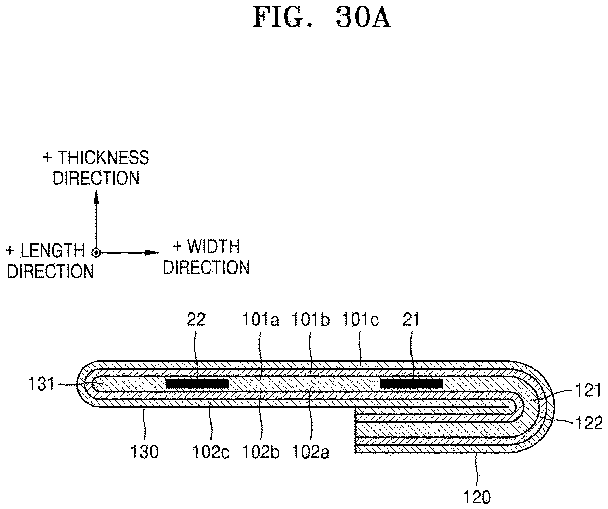

FIG. 30A is a cross-sectional view taken along line A-A' of the electrochemical device 217 for storing energy illustrated in FIG. 28.

In particular, FIG. 30A illustrates a cross-sectional plane of the connection portion 111. Referring to FIG. 30A, inside the connection portion 111, a first conductive line 21 and a second conductive line 22 for electrically connecting the plurality of electrode assemblies 10 are disposed in parallel with each other. The first conductive line 21 and the second conductive line 22 may be respectively connected to a first lead tab 23 and a second lead tab 24 drawn to the outside of the electrochemical device 217. The first conductive line 21 and the second conductive line 22 may be surrounded by the first sealing layer 101a of the first packing film 101 and the second sealing layer 102a of the second packing film 102, and the first sealing layer 101a of the first packing film 101 and the second sealing layer 102a of the second packing film 102 may be bonded to each other between the first conductive line 21 and the second conductive line 22. The first bonded portion 120 may be located on the right side of the first conductive line 21 in the width direction, and the second bonded portion 130 may be located on the left side of the second conductive line 22 in the width direction.

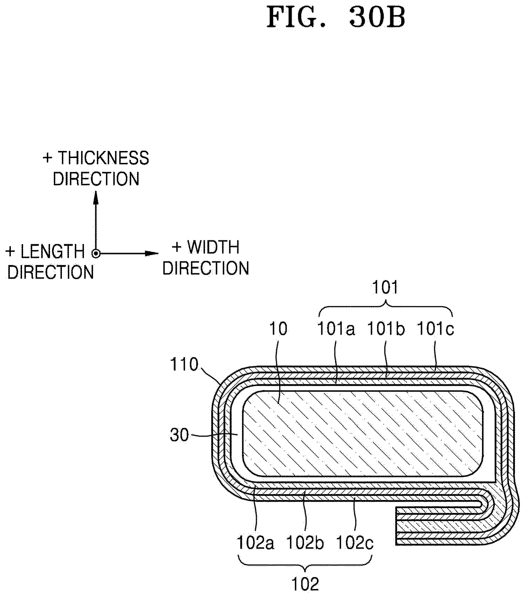

FIG. 30B is a cross-sectional view of the accommodation portion 110 of the electrochemical device 217 for storing energy of FIG. 28, in the width direction.

Referring to FIG. 30B, in an exemplary embodiment, the accommodation portion 110 may not include the third gas barrier layer 122, and thus, the accommodation portion 110 does not include the portion which may be defined as the first gas barrier rim portion. Thus, the first gas barrier rim portion is not formed in the area in which the accommodation portion 110 is disposed, and the first and second gas barrier rim portions are formed only in the connection portion 111. In such an embodiment, the first and second gas barrier rim portions are discontinuously disposed along the length direction.

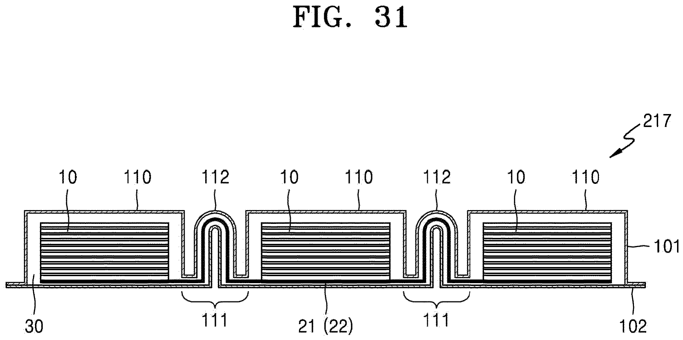

FIG. 31 is a cross-sectional view of the electrochemical device 217 for storing energy of FIG. 28 in a length direction.

Referring to FIG. 31, an exemplary embodiment of the invention for the electrochemical device 217 includes a plurality of electrode assemblies 10 disposed apart from one another in the length direction. In such an embodiment, the packing member 101 and 102 of the electrochemical device 217 includes a plurality of accommodation portions 110 for accommodating the plurality of electrode assemblies 10, and the connection portion 111 connecting between the plurality of accommodation portions 110. A thickness of the connection portion 111 may be less than a thickness of the accommodation portion 110. As illustrated in FIG. 31, the connection portion 111 may be connected between lower portions of two facing side surfaces of the accommodation portions 110. In such an embodiment, the first packing film 101 may protrude in a positive (+) thickness direction to form the accommodation portion 110. The first and second conductive lines 21 and 22 extend through an inner portion of the plurality of connection portions 111, to electrically connect the plurality of electrode assemblies 10 disposed in the accommodation portions 110, respectively, with one another.

In an exemplary embodiment of the invention, the connection portion 111 may be repeatedly bent to have at least one curved bending portion 112 in a region in which the first and second bonded portions 120 and 130 are curved. In one exemplary embodiment of the invention, for example, after bending the connection portion 111 by about 90 degrees, the connection portion 111 may be bent in an opposite direction by about 180 degrees, and may be bent again by 90 degrees, to form the bending portion 112. Alternatively, the bending portion 112 may be formed by pressurizing the connection portion 111 by an object having a shape of the bending portion 112. After the bending portion 112 is formed, a heating or chemical process may be performed on the connection portion 111, in an exemplary embodiment where the heating or chemical process is used to maintain the shape of the bending portion 112.

In an exemplary embodiment of the invention for the electrochemical device 217, since the bending portion 112 has a sufficient elastic resilience, strain and stress applied to the connection portion 111 may be distributed by the bending portion 112. Thus, the reliability and durability of the electrochemical device 217 against bending may be improved. Also, since distances between the electrode assemblies 10 may be reduced by providing the bending portion, an energy density of the electrochemical device 217 may be improved. Since the electrochemical device 217 may be easily bent, the electrochemical device 217 may be applied to any type of electronic devices, and may realize a flexible electronic device.

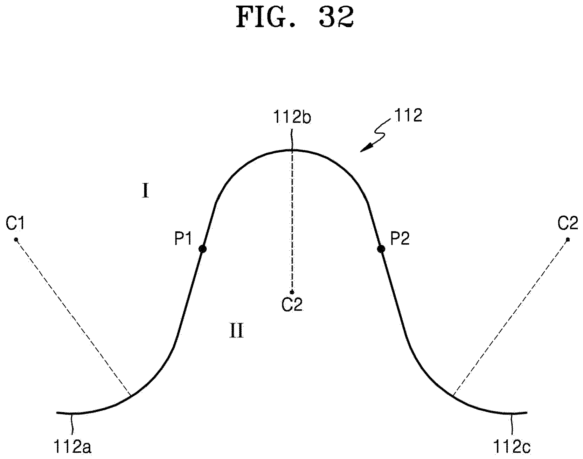

FIG. 32 is a view showing a change in a location of a center of curvature, according to locations of points on a bending portion 112.

Referring to FIG. 32, the bending portion 112 may include a first bent portion 112a, a second bent portion 112c, and a ridge portion 112b. The first bent portion 112a is a portion of the connection portion 111 which is bent by about 90 degrees to face a side surface of one accommodation portion 110. The second bent portion 112c is a portion of the connection portion 111 which is bent by about 90 degrees to face a side surface of another accommodation portion 110. In one exemplary embodiment, for example, a radius of curvature of the first bent portion 112a and the second bent portion 112c may be less than about 0.3 mm. The ridge portion 112b is connected between the first bent portion 112a and the second bent portion 112c. In the ridge portion 112b, the connection portion 111 may be bent by about 180 degrees by forming a smooth curve.

A space surrounding the bending portion 112 may be divided into two by the bending portion 112. That is, the space may be divided as space I at an upper side of the bending portion 112 and space II at a bottom side of the bending portion 112. Also, a center of curvature C1 of a point on the bending portion 112, which is located in a portion of the first bent portion 112a, is located in space I, and a center of curvature C3 of a point on the bending portion 112, which is located in a portion of the second bent portion 112c, is located in space I. As shown in FIG. 32, a center of curvature C2 of a point on the bending portion 112, which is located in a portion of the ridge portion 112b, is located in space II which is on the opposite side to space I. Thus, the bending portion 112 has a point thereon, the location of the center of curvature of which changes from space I to space II, and again from space II to space I. Hereinafter, such points will be referred to as bending direction conversion points. FIG. 32 illustrates a first bending direction conversion point P1 and a second bending direction conversion point P2 on the bending portion 112. The center of curvature is located in space I at a left side with respect to the first bending direction conversion point P1, and the center of curvature is located in space II at a right side with respect to the first bending direction conversion point P1. As shown in FIG. 32, with respect to the second bending direction conversion point P2, the center of curvature is located in space II at a left side and the center of curvature is located in space I at a right side.

To trace an evolute, which is a trace of the center of curvature of each point on a curved line, when a point moves from the first bent portion 112a to the first bending direction conversion point P1, the center of curvature of the point becomes distant from the bending portion 112 toward space I, and is located at infinity when the point is at the first bending direction conversion point P1. Also, between the first bending direction conversion point P1 and the second bending direction conversion point P2, the center of curvature is located at infinity toward space II and is closest to the bending portion 112 at an apex of the ridge portion 112b. Also, as it becomes near to the second bending direction conversion point P2, the center of curvature become distant from the bending portion 112 toward space II and is located at infinity at the second bending direction conversion point P2. Also, when it approaches from the second bending direction conversion point P2 to the portion of the second bent portion 112c, the center of curvature is at infinity toward space I and gradually becomes near to the bending portion 112. Thus, there are discontinuous portions of the evolute at the first bending direction conversion point P1 and the second bending direction conversion point P2, where the bending direction of the bending portion 112 changes. In an exemplary embodiment, as shown in FIG. 32, the number of bending direction conversion points is two, but it is not limited thereto. According to shapes of the bending portion 112, the number of bending direction conversion points may vary. In one alternative exemplary embodiment, for example, the bending portion 112 may have a single bending direction conversion point, or may have three or more bending direction conversion points.

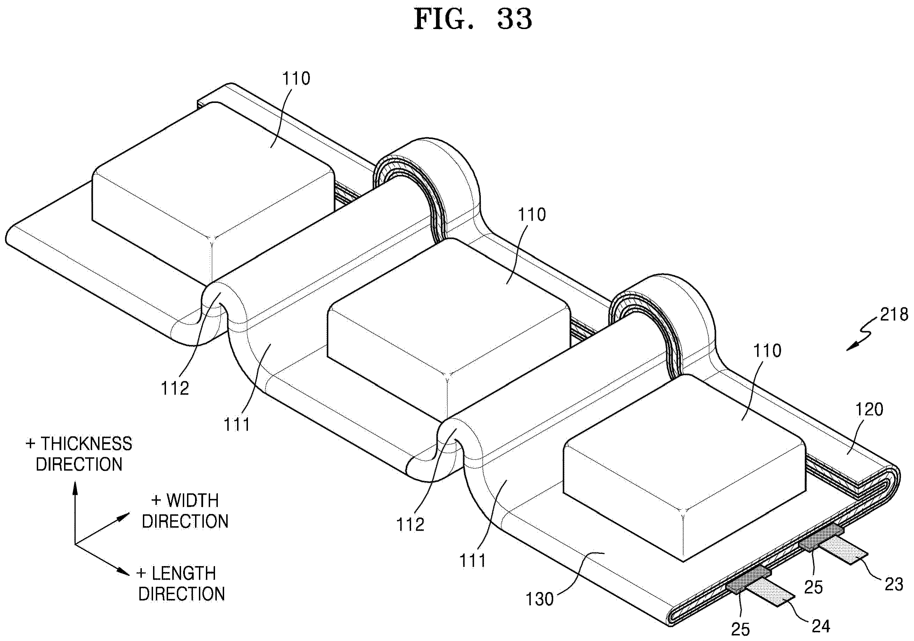

FIG. 33 is a perspective view of a structure of an electrochemical device 218 for storing energy, according to another alternative exemplary embodiment of the invention.

In an exemplary embodiment of the invention, as shown in FIG. 29, the first and second bonded portions 120 and 130 are not formed on both sides of the accommodation portion 110. In an alternative exemplary embodiment of the invention for the electrochemical device 218, as shown in FIG. 33, the first and second bonded portions 120 and 130 may be formed on both sides of the accommodation portion 110 to protrude in the width direction. In such an embodiment, the first bonded portion 120 may be bent in a positive (+) thickness direction.

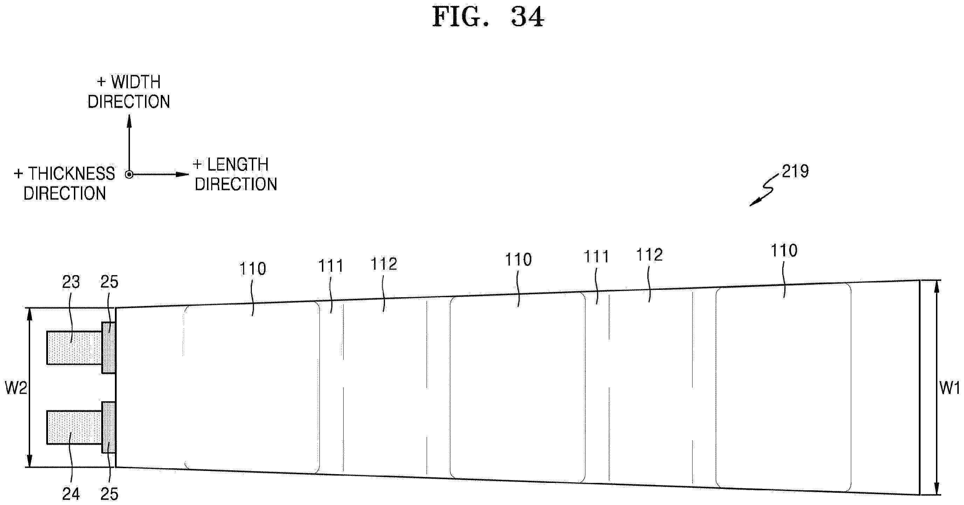

FIG. 34 is a plan view of a structure of an electrochemical device 219 for storing energy, according to another alternative exemplary embodiment of the invention.

Referring to FIG. 34, the electrochemical device 219 may have a width that changes along a length direction. In one exemplary embodiment, for example, a width of the electrochemical device 219 at a first end of the length direction may be denoted by W1, and a width of the electrochemical device 219 at a second end which is opposite to the first end may be denoted by W2. In an exemplary embodiment of the invention, as shown in FIG. 34, the electrochemical device 219 may have a width that satisfies the following inequality: W1 > W2, but not being limited thereto. In an alternative exemplary embodiment of the invention, the electrochemical device 219 may have a width that satisfies the following inequality: W1 < W2. In an exemplary embodiment, as shown in FIG. 34, the width of the electrochemical device 219 gradually changes, but not being limited thereto. Alternatively, the width of the electrochemical device 219 may discontinuously change.

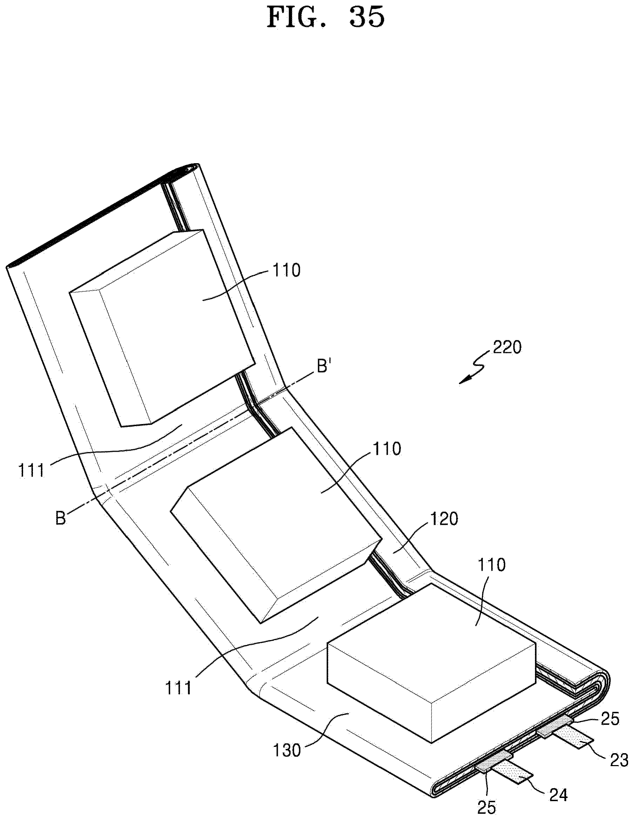

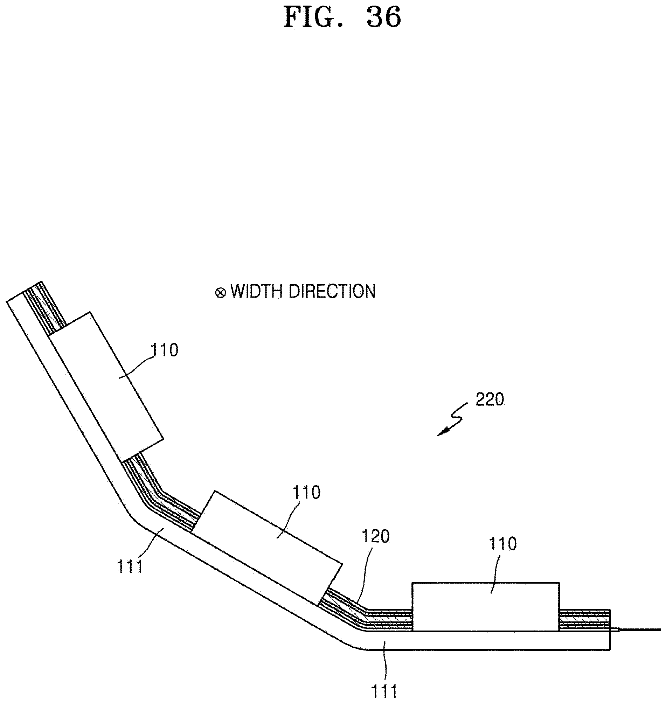

FIG. 35 is a perspective view of a structure of an electrochemical device 220 for storing energy, according to another alternative exemplary embodiment of the invention. FIG. 36 is a side view of the structure of the electrochemical device 220 for storing energy illustrated in FIG. 35.

As illustrated in FIGS. 35 and 36, in an exemplary embodiment of the invention, the bent portion 112 may not be defined or formed in the connection portion 111 of the electrochemical device 220. In such an embodiment, the connection portion 111, which is thin, may be effectively bent so that the electrochemical device 220 is bent. In an exemplary embodiment of the invention, as shown in FIGS. 35 and 36, all of the connection portions 111 may be bent, but not being limited thereto. Alternatively, only some of the plurality of connection portions 111 may be bent.

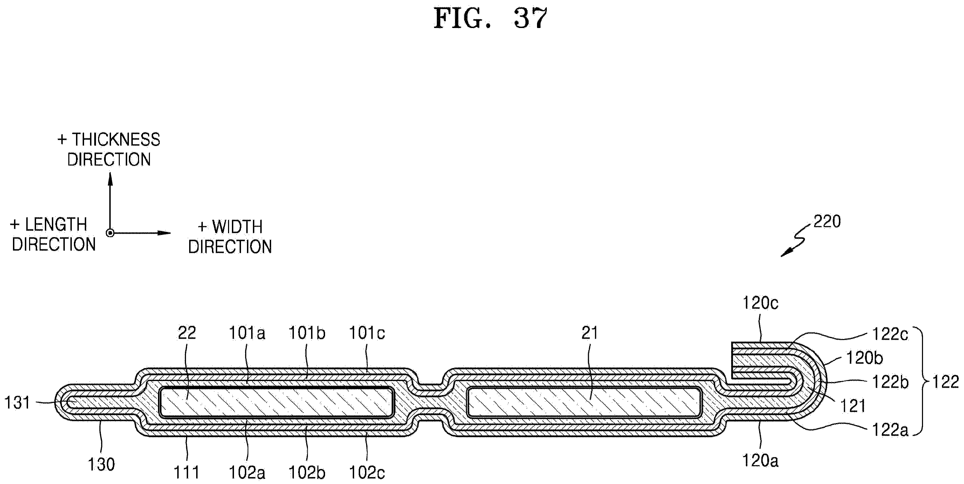

FIG. 37 is a cross-sectional view taken along line B-B' of the electrochemical device 220 for storing energy of FIG. 35.

In particular, FIG. 37 illustrates a cross-sectional plane of the connection portion 111. Referring to FIG. 37, first and second conductive lines 21 and 22 for electrically connecting the plurality of electrode assemblies 10 are disposed in parallel with each other in the connection portion 11. The first sealing layer 101a of the first packing film 101 and the second sealing layer 102a of the second packing film 102 may surround the first and second conductive lines 21 and 22. Between the first conductive line 21 and the second conductive line 22, the first sealing layer 101a of the first packing film 101 and the second sealing layer 102a of the second packing film 102 may be bonded to each other. On the right side of the first wire 21 in the width direction, the first bonded portion 120 may be located, and on the left side of the second wire 22 in the width direction, the second bonded portion 130 may be located. The first bonded portion 120 may be bent in a positive (+) thickness direction.

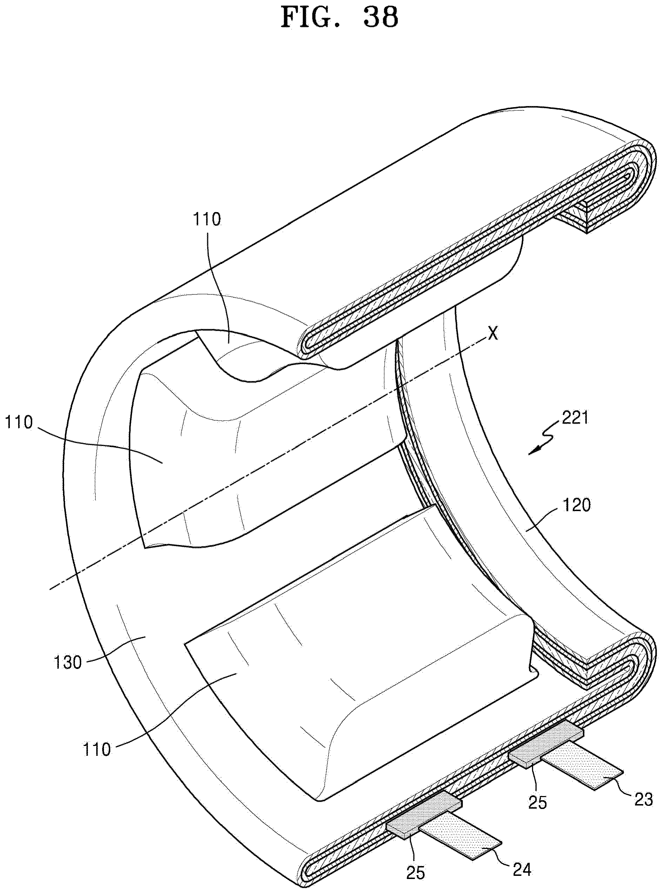

FIG. 38 is a perspective view of a structure of an electrochemical device 221 for storing energy, according to another alternative exemplary embodiment of the invention.

In an exemplary embodiment of the invention, as illustrated in FIG. 38, the electrochemical device 221 may be constantly curved in overall. In such an embodiment, not only the connection portion 111 but also the accommodation portion 110 may be bent in the electrochemical device 221. In such an embodiment, the electrode assembly 10 which is freely bendable, as illustrated in FIG. 4, may be disposed in the accommodation portion 110.

It should be understood that the exemplary embodiments described herein should be considered in a descriptive sense only and not for purposes of limitation. Descriptions of features or aspects within each embodiment should typically be considered as available for other similar features or aspects in other embodiments.

While one or more embodiments of the invention have been described with reference to the figures, it will be understood by those of ordinary skill in the art that various changes in form and details may be made herein without departing from the invention as defined by the following claims.

## Claims

1. An electrochemical device comprising:
an electrode assembly (10) in which a length direction, a thickness direction, and a width direction are defined; and
a packing member in which the electrode assembly is disposed,
wherein the packing member comprises:
a first packing film (101) comprising a first gas barrier layer (101b) and a first sealing layer (101a); and
a second packing film (102) comprising a second gas barrier layer (102b) and a second sealing layer (102a),
wherein the packing member further comprises:
an accommodation portion (110) in which the electrode assembly is disposed between the first packing film (101) and the second packing film (102); and
a bonded portion (120, 130) in which an edge of the first packing film and an edge of the second packing film are bonded to each other,
wherein the bonded portion comprises a first gas barrier rim portion extending in the length direction,
wherein the first gas barrier rim portion comprises:
a first bonded sealing layer (121), in which a first area of the first sealing layer (101a) is bonded to a first area of the second sealing layer (102a); and
a third gas barrier layer (122) contacting the first bonded sealing layer (121),
wherein the third gas barrier (122) layer comprises: a bottom portion (122a) and an upper portion (122c) parallel to the first bonded sealing layer (121) and disposed at different heights from each other; and a middle portion (122b) continuously extending between the bottom portion (122a) and the upper portion (122c) and surrounding an end of the first bonded sealing layer (121) in the width direction;
and wherein the first gas barrier rim portion is bendable around an axis of the width direction in a region in the length direction; **characterized in that** the electrochemical device comprises at least two accommodation portions disposed apart from one another in the length direction, at least two electrode assemblies disposed in the at least accommodation portions, respectively, and at least one connection portion (111) connecting the at least two accommodation portions and wherein the electrochemical device further comprises a first conductive line (21) and a second conductive line (22) extending through an inner portion of the at least one connection portion (111) to electrically connect the electrode assemblies (10) disposed in the at least two accommodation portions (110), respectively, with one another.

2. The electrochemical device of claim 1, wherein at least one of a portion of the first packing film (101) and a portion of the second packing film (102), which define the accommodation portion, protrudes in the thickness direction.

3. The electrochemical device of claim 1 or claim 2, wherein
a thickness of the connection portion (111) is less than a thickness of the at least two accommodation portions, and
the connection portion (111) is bent to have a curved bending portion (112) in the region in the length direction, and preferably wherein:
a center of curvature of each of points on the bending portion (112) is located in one of a first space and a second space, which are on opposite sides to each other, based on the bending portion (112), and
the bending portion (112) has a bending direction conversion point where a location of the center of curvature is changed from the first space to the second space or from the second space to the first space.

4. The electrochemical device (200) of any preceding claim, wherein a portion of the bonded portion (120, 130) is folded such that the third gas barrier (122) layer is defined to surround the first bonded sealing layer (121) to form the first gas barrier rim portion, and optionally wherein the first gas barrier rim portion comprises:
a first portion (120a, 130a) in which a portion of the bonded portion extends from a side surface of the accommodation portion in the width direction;
a second portion (120b, 130b) which continuously extends from the first portion and is bent by about 180 degrees; and
a third portion (120c, 130c) which continuously extends from the second portion (120b, 130b) in the width direction and faces the first portion (120a, 130a).

5. The electrochemical device of claim 4, wherein the third gas barrier (122) layer is defined by a portion of the first gas barrier layer (101b) or the second gas barrier layer (102b), and
the third gas barrier (122) layer extends from the first gas barrier layer (101b) or the second gas barrier layer (102b) in the first portion (120a, 130a) of the first gas barrier rim portion, and optionally
wherein the first portion (120a, 130a) and the third portion (120c, 130c) of the first gas barrier rim portion are bonded to each other.

6. The electrochemical device (200) of any preceding claim, wherein the first bonded sealing layer (121) is bonded to a surface of the first packing film (101).

7. The electrochemical device (200) of any of claims 4 to 6, wherein the first gas barrier rim portion further comprises:
a fourth portion (120d) in which a portion of the bonded portion (120) continuously extends from the third portion (120c) and is additionally bent; and
a fifth portion (120e) continuously extending from the fourth portion (120d) and parallel to the first portion (120a) and the third portion (120c).

8. The electrochemical device of any preceding claim, wherein the first packing film (101) and the second packing film (102) are integrally formed, and
(a) a first edge of the first packing film (101) in the length direction and a first edge of the second packing film (102) in the length direction are integrally connected to each other, and
the integrally connected portion of the first packing film (101) and the second packing film (102) is folded along the width direction, and a second edge of the first packing film (101) in the length direction and a second edge of the second packing film (102) in the length direction are bonded to each other, or
(b) the first edge of the first packing film (101) in the width direction and the first edge of the second packing film (102) in the width direction are integrally connected to each other, and
the integrally connected portion of the first packing film (101) and the second packing film (102) is folded along the length direction, and a second edge of the first packing film (101) in the width direction and a second edge of the second packing film (102) in the width direction are bonded to each other.

9. The electrochemical device (200) of claim 1, wherein the first gas barrier rim portion comprises:
a third portion (120c) bent to face the first packing film (101);
a first portion (120a) bent in an opposite direction to the third portion (120a) to face the second packing film (102); and
a second portion (120b) continuously extending between the first portion and the third portion, and optionally wherein
the packing member further comprises a third packing film (104), separated from the first and second packing films (101), (102),
the third packing film (104) comprises a gas barrier layer and a sealing layer,
the third packing film surrounds the first bonded sealing layer, and
the gas barrier layer of the third packing film is bonded to the first sealing layer (101a) and the second sealing layer (102a) to define the third gas barrier (122) layer.

10. The electrochemical device (200) of any preceding claim, wherein
the first gas barrier rim portion (120) is bent around the axis of the width direction, and
an inside radius of curvature of the region in the length direction, in which the first gas barrier rim portion is bent, is in a range of 0.2 millimeters to 800 millimeters.

11. The electrochemical device (200) of any preceding claim, wherein at least one of the first packing film (101) and the second packing film (102) is stretchable in the region in the length direction so that the first gas barrier rim portion is allowed to be repeatedly bending in the region in the length direction, and optionally wherein the at least one of the first gas barrier layer (101b) and the second gas barrier layer (102b) includes a plurality of concavo-convex shaped portions or wrinkle shaped portions in the length direction, and further optionally wherein at least one of the first packing film (101) and the second packing film (102) comprises a stretchable material in the region in the length direction.

12. The electrochemical device (200) of any preceding claim, wherein a thickness of the electrochemical device is less than about 1 millimeter in a region in the length direction or in an entire region in the length direction.

13. The electrochemical device (200) of any preceding claim, wherein
the first gas barrier rim portion includes at least two regions in the length direction such that the first gas barrier rim portion is bendable around the axis of the width direction, and
the at least two regions of the first gas barrier rim portion is discontinuously disposed.

14. The electrochemical device (200) of any preceding claim, wherein
the bonded portion (120, 130) further comprises a second gas barrier rim portion disposed on a side opposite the first gas barrier rim portion in the width direction and extending in the length direction,
the second gas barrier rim portion comprises:
a second bonded sealing layer (131) in which a second area of the first sealing layer (101a) and a second area of the second sealing layer (102a) are bonded to each other; and
a fourth gas barrier (132) layer contacting the second bonded sealing layer (131), and
the fourth gas barrier (132) layer comprises: a bottom portion (132a) and an upper portion (132c) parallel to the second bonded sealing layer and disposed at different heights from each other; and a middle portion (132b) continuously extending between the bottom portion (132a) and the upper portion (132c) and bent to surround an end of the second bonded sealing layer (131) in the width direction.

15. The electrochemical device (200) of any preceding claim, wherein
the first packing film (101) further comprises a first outer insulating layer (101c),
the second packing film (102) further comprises a second outer insulating layer (102c),
the first sealing layer (101a) and the first outer insulating layer (101c) are disposed on opposite surfaces of the first gas barrier layer (101b), respectively, and
the second sealing layer (102a) and the second outer insulating layer (102c) are disposed on opposite surfaces of the second gas barrier layer (102b), respectively.

## Patentansprüche

1. Elektrochemische Vorrichtung, aufweisend:
eine Elektrodenbaugruppe (10), in der eine Längsrichtung, eine Dickenrichtung und eine Breitenrichtung definiert sind; und
ein Verpackungselement, in dem die Elektrodenbaugruppe angeordnet ist, wobei das Verpackungselement aufweist;
eine erste Verpackungsfolie (101), die eine erste Gasbarrierenschicht (101b) und eine erste Dichtungsschicht (101a) aufweist; und
eine zweite Verpackungsfolie (102), die eine zweite Gasbarrierenschicht (102b) und eine zweite Dichtungsschicht (102a) aufweist, wobei das Verpackungselement ferner aufweist:
einen Aufnahmeabschnitt (110) in dem die Elektrodenbaugruppe zwischen der ersten Verpackungsfolie (101) und der zweiten Verpackungsfolie (102) angeordnet ist; und
einen geklebten Abschnitt (120, 130), in dem eine Kante der ersten Verpackungsfolie und eine Kante der zweiten Verpackungsfolie aneinander geklebt sind, wobei der geklebte Abschnitt einen ersten Gasbarrieren-Randabschnitt aufweist, der sich in der Längsrichtung erstreckt, wobei der ersten Gasbarrieren-Randabschnitt aufweist:
eine erste geklebte Dichtungsschicht (121), in der ein erster Bereich der ersten Dichtungsschicht (101a) an einen ersten Bereich der zweiten Dichtungsschicht (102a) geklebt ist; und
wobei eine dritte Gasbarrierenschicht (122) die erste geklebte Dichtungsschicht (121) berührt,
wobei die dritte Gasbarrierenschicht (122) aufweist:
einen unteren Abschnitt (122a) und einen oberen Abschnitt (122c), parallel zu der ersten geklebten Dichtungsschicht (121) und auf unterschiedlichen Höhen voneinander angeordnet; und
einen mittleren Abschnitt (122b), der sich durchgehend zwischen dem unteren Abschnitt (122a) und dem oberen Abschnitt (122c) erstreckt und ein Ende der ersten geklebten Dichtungsschicht (121) in der Breitenrichtung umgibt; und
wobei der erste Gasbarrieren-Randabschnitt um eine Achse der Breitenrichtung in einem Bereich in der Längsrichtung biegbar ist;
**dadurch gekennzeichnet, dass** die elektrochemische Vorrichtung mindestens zwei Aufnahmeabschnitte aufweist, die in der Längsrichtung voneinander beabstandet angeordnet sind, mindestens zwei Elektrodenbaugruppen, die jeweils in den mindestens zwei Aufnahmeabschnitten angeordnet sind, und mindestens einen Verbindungsabschnitt (111), der die mindestens zwei Aufnahmeabschnitte verbindet, und wobei die elektrochemische Vorrichtung ferner eine erste leitfähige Leitung (21) und eine zweite leitfähige Leitung (22) aufweist, die sich durch einen inneren Abschnitt des mindestens einen Verbindungsabschnitts (111) erstrecken, um die Elektrodenbaugruppen (10), die jeweils in den mindestens zwei Aufnahmeabschnitten (110) angeordnet sind, elektrisch miteinander zu verbinden.

2. Elektrochemische Vorrichtung nach Anspruch 1, wobei mindestens einer von einem Abschnitt der ersten Verpackungsfolie (101) und einem Abschnitt der zweiten Verpackungsfolie (102), die den Aufnahmeabschnitt definieren, in der Dickenrichtung herausragt.

3. Elektrochemische Vorrichtung nach Anspruch 1 oder Anspruch 2, wobei eine Dicke des Verbindungsabschnitts (111) kleiner als eine Dicke der mindestens zwei Aufnahmeabschnitte ist, und
der Verbindungsabschnitt (111) gebogen wird, um einen gekrümmten Biegungsabschnitt (112) in dem Bereich in der Längsrichtung zu haben, und bevorzugt wobei:
ein Krümmungsmittelpunkt von jedem Punkt auf dem Biegungsabschnitt (112) sich in einem von einem ersten Raum und einem zweiten Raum befindet, die sich auf Grundlage des Biegungsabschnitts (112) auf einander entgegengesetzten Seiten befinden, und
der Biegungsabschnitt (112) einen Biegungsrichtung-Umwandlungspunkt hat, an dem eine Position des Krümmungsmittelpunkts von dem ersten Raum auf den zweiten Raum oder von dem zweiten Raum auf den ersten Raum geändert wird.

4. Elektrochemische Vorrichtung (200) nach einem der vorhergehenden Ansprüche, wobei ein Abschnitt des geklebten Abschnitts (120, 130) so gefaltet wird, dass die dritte Gasbarrierenschicht (122) definiert wird, um die ersten geklebte Dichtungsschicht (121) zu umgeben, um den ersten Gasbarrieren-Randabschnitt zu bilden, und optional, wobei der erste Gasbarrieren-Randabschnitt aufweist:
einen ersten Abschnitt (120a, 130a), in dem ein Abschnitt des geklebten Teils sich von einer Seitenfläche des Aufnahmeabschnitts in der Breitenrichtung erstreckt;
einen zweiten Abschnitt (120b, 130b), der sich durchgehend von dem ersten Abschnitt aus erstreckt und um ungefähr 180 Grad gebogen ist; und
einen dritten Abschnitt (120c, 130c), der sich durchgehend von dem zweiten Abschnitt (120b, 130b) in der Breitenrichtung erstreckt und dem ersten Abschnitt (120a, 130a) zugewandt ist.

5. Elektrochemische Vorrichtung nach Anspruch 4, wobei die dritte Gasbarrierenschicht (122) durch einen Abschnitt der ersten Gasbarrierenschicht (101b) oder der zweiten Gasbarrierenschicht (102b) definiert wird und sich die dritte Gasbarrierenschicht (122) von der ersten Gasbarrierenschicht (101b) oder der zweiten Gasbarrierenschicht (102b) in den ersten Abschnitt (120a, 130a) des ersten Gasbarrieren-Randabschnitts erstreckt, und optional
wobei der erste Abschnitt (120a, 130a) und der dritte Abschnitt (120c, 130c) des ersten Gasbarrieren-Randabschnitts aneinander geklebt sind.

6. Elektrochemische Vorrichtung (200) nach einem der vorhergehenden Ansprüche, wobei die erste geklebte Dichtungsschicht (121) an eine Fläche der ersten Verpackungsfolie (101) geklebt ist.

7. Elektrochemische Vorrichtung (200) nach einem der Ansprüche 4 bis 6, wobei der erste Gasbarrieren-Randabschnitt ferner aufweist:
einen vierten Abschnitt (120d), in dem sich ein Abschnitt des geklebten Abschnitts (120) durchgehend von dem dritten Abschnitt (120c) erstreckt und zusätzlich gebogen ist; und
einen fünften Abschnitt (120e), der sich durchgehend von dem vierten Abschnitt (120d) und parallel zu dem ersten Abschnitt (120a) und dem dritten Abschnitt (120c) erstreckt.

8. Elektrochemische Vorrichtung nach einem der vorhergehenden Ansprüche, wobei die erste Verpackungsfolie (101) und die zweite Verpackungsfolie (102) fest miteinander verbunden ausgebildet sind, und
(a) eine erste Kante der ersten Verpackungsfolie (101) in der Längsrichtung und eine erste Kante der zweiten Verpackungsfolie (102) in der Längsrichtung fest miteinander verbunden sind; und
der fest verbundene Abschnitt der ersten Verpackungsfolie (101) und der zweiten Verpackungsfolie (102) entlang der Breitenrichtung gefaltet sind, und eine zweite Kante der ersten Verpackungsfolie (101) in der Längsrichtung und eine zweite Kante der zweiten Verpackungsfolie (102) in der Längsrichtung aneinander geklebt sind, oder
(b) die erste Kante der ersten Verpackungsfolie (101) in der Breitenrichtung und die erste Kante der zweiten Verpackungsfolie (102) in der Breitenrichtung fest miteinander verbunden sind; und
der fest verbundene Abschnitt der ersten Verpackungsfolie (101) und der zweiten Verpackungsfolie (102) entlang der Längsrichtung gefaltet sind, und eine zweite Kante der ersten Verpackungsfolie (101) in der Breitenrichtung und eine zweite Kante der zweiten Verpackungsfolie (102) in der Breitenrichtung aneinander geklebt sind.

9. Elektrochemische Vorrichtung (200) nach Anspruch 1, wobei der erste Gasbarrieren-Randabschnitt aufweist:
einen dritten Abschnitt (120c), der so gebogen ist, dass er der ersten Verpackungsfolie (101) zugewandt ist;
einen ersten Abschnitt (120a), der in eine entgegengesetzte Richtung zu dem dritten Abschnitt (120a) so gebogen ist, dass er der zweiten Verpackungsfolie (102) zugewandt ist; und
einen zweiten Abschnitt (120b), der sich durchgehend zwischen dem ersten Abschnitt und dem dritten Abschnitt erstreckt, und optional, wobei das Verpackungselement ferner eine dritte Verpackungsfolie (104) aufweist, die von den ersten und zweiten Verpackungsfolien (101), (102) getrennt ist, die dritte Verpackungsfolie (104) eine Gasbarrierenschicht und eine Dichtungsschicht aufweist, die dritte Verpackungsfolie die erste geklebte Dichtungsschicht umgibt, und die Gasbarrierenschicht der dritten Verpackungsfolie an die erste Dichtungsschicht (101a) und die zweite Dichtungsschicht (102a) geklebt ist, um die dritte Gasbarrierenschicht (122) zu definieren.

10. Elektrochemische Vorrichtung (200) nach einem der vorhergehenden Ansprüche, wobei der erste Gasbarrieren-Randabschnitt (120) um die Achse der Breitenrichtung gebogen ist, und einen Innenradius der Krümmung des Bereichs in der Längsrichtung, in die der erste Gasbarrieren-Randabschnitt gebogen ist, in einem Bereich von 0,2 Millimeter bis 800 Millimeter liegt.

11. Elektrochemische Vorrichtung (200) nach einem der vorhergehenden Ansprüche, wobei mindestens eine von der ersten Verpackungsfolie (101) und der zweiten Verpackungsfolie (102) in den Bereich in der Längsrichtung dehnbar ist, sodass es dem ersten Gasbarrieren-Randabschnitt ermöglicht wird, sich wiederholt in den Bereich in der Längsrichtung zu biegen, und optional, wobei die mindestens eine der ersten Gasbarrierenschicht (101b) und der zweiten Gasbarrierenschicht (102b) eine Mehrzahl von konkav-konvex geformten Abschnitten oder faltenförmigen Abschnitten in der Längsrichtung enthält, und ferner optional, wobei mindestens eine von der ersten Verpackungsfolie (101) und der zweiten Verpackungsfolie (102) ein dehnbares Material in dem Bereich in der Längsrichtung aufweist.

12. Elektrochemische Vorrichtung (200) nach einem der vorhergehenden Ansprüche, wobei eine Dicke der elektrochemischen Vorrichtung kleiner als ungefähr 1 Millimeter in einem Bereich in der Längsrichtung oder in einem gesamten Bereich in der Längsrichtung ist.

13. Elektrochemische Vorrichtung (200) nach einem der vorhergehenden Ansprüche, wobei der erste Gasbarrieren-Randabschnitt mindestens zwei Bereiche in der Längsrichtung enthält, sodass der erste Gasbarrieren-Randabschnitt um die Achse der Breitrichtung biegbar ist, und die mindestens zwei Bereiche des ersten Gasbarrieren-Randabschnitts nicht durchgängig angeordnet sind.

14. Elektrochemische Vorrichtung (200) nach einem der vorhergehenden Ansprüche, wobei der geklebte Abschnitt (120, 130) ferner einen zweiten Gasbarrieren-Randabschnitt aufweist, der auf einer dem ersten Gasbarrieren-Randabschnitt entgegengesetzten Seite in der Breitenrichtung angeordnet ist und sich in der Längsrichtung erstreckt, wobei der zweite Gasbarrieren-Randabschnitt aufweist:
eine zweite geklebte Dichtungsschicht (131), in der ein zweiter Bereich der ersten Dichtungsschicht (101a) und ein zweiter Bereich der zweiten Dichtungsschicht (102a) aneinander geklebt sind; und
eine vierte Gasbarrierenschicht (132) die zweite geklebte Dichtungsschicht (131) berührt, und die vierte Gasbarrierenschicht (132) aufweist; einen unteren Abschnitt (132a) und einen oberen Abschnitt (132c), parallel zu der zweiten geklebten Dichtungsschicht und auf unterschiedlichen Höhen voneinander angeordnet; und
einen mittleren Abschnitt (132b), der sich durchgehend zwischen dem unteren Abschnitt (132a) und dem oberen Abschnitt (132c) erstreckt und gebogen ist, um ein Ende der zweiten geklebten Dichtungsschicht (131) in der Breitenrichtung zu umgeben.

15. Elektrochemische Vorrichtung (200) nach einem der vorhergehenden Ansprüche, wobei die erste Verpackungsfolie (101) ferner eine erste Außenisolierungsschicht (101c) aufweist, die zweie Verpackungsfolie (102) ferner eine zweite Außeniso lierungsschicht (102c) aufweist, die erste Dichtungsschicht (101a) und die erste Außenisolierungsschicht (101c) jeweils auf entgegengesetzten Seiten der ersten Gasbarrierenschicht (101b) angeordnet sind, und die zweite Dichtungsschicht (102a) und die zweite Außenisolierungsschicht (102c) jeweils auf entgegengesetzten Seiten der zweiten Gasbarrierenschicht (102b) angeordnet sind.

## Revendications

1. Dispositif électrochimique comprenant :
un ensemble électrode (10) dans laquelle le sens de la longueur, le sens de l'épaisseur et le sens de la largeur sont définies ; et
un élément d'emballage dans lequel l'ensemble électrode est disposé, ledit élément d'emballage comprenant :
un premier film d'emballage (101) comprenant une première couche barrière aux gaz (101b) et une première couche d'étanchéité (101a) ; et
un deuxième film d'emballage (102) comprenant une deuxième couche barrière aux gaz (102b) et une seconde couche d'étanchéité (102a),
ledit élément d'emballage comprenant en outre :
une partie logement (110) dans laquelle l'ensemble électrode est disposé entre le premier film d'emballage (101) et le deuxième film d'emballage (102) ; et
une partie collée (120, 130) dans laquelle un bord du premier film d'emballage et un bord du deuxième film d'emballage sont collés l'un à l'autre, ladite partie collée comprenant une première partie de rebord barrière aux gaz s'étendant dans le sens de la longueur, ladite première partie de rebord barrière aux gaz comprenant :
une première couche d'étanchéité collée (121), dans laquelle une première zone de la première couche d'étanchéité (101a) est collée à une première zone de la seconde couche d'étanchéité (102a) ; et
une troisième couche barrière aux gaz (122) étant en contact avec la première couche d'étanchéité collée (121), ladite troisième couche barrière aux gaz (122) comprenant :
une partie inférieure (122a) et une partie supérieure (122c) parallèles à la première couche d'étanchéité collée (121) et disposées à des hauteurs différentes l'une de l'autre ; et
une partie centrale (122b) s'étendant en continu entre la partie inférieure (122a) et la partie supérieure (122c) et entourant une extrémité de la première couche d'étanchéité collée (121) dans le sens de la largeur ; et
ladite première partie de rebord barrière aux gaz étant pliable autour d'un axe dans le sens de la largeur dans une région dans le sens de la longueur ;
**caractérisé en ce que** le dispositif électrochimique comprend au moins deux parties de logement écartées l'une de l'autres dans le sens de la longueur, au moins deux ensembles électrodes étant disposés dans lesdites au moins deux parties de logement, respectivement, et au moins une partie de connexion (111) reliant lesdites au moins deux parties de logement et ledit dispositif électrochimique comprenant en outre une première ligne conductrice (21) et une seconde ligne conductrice (22) s'étendant à travers une partie interne de ladite au moins une partie de connexion (111) pour connecter électriquement les ensembles électrodes (10) disposés dans lesdites au moins deux parties de logement (110), respectivement, l'un à l'autre.

2. Dispositif électrochimique selon la revendication 1, au moins l'une d'une partie du premier film d'emballage (101) et une partie du deuxième film d'emballage (102), qui définissent la partie de logement, faisant saillie dans le sens de l'épaisseur.

3. Dispositif électrochimique selon la revendication 1 ou 2, l'épaisseur de la partie de connexion (111) étant inférieure à l'épaisseur desdites au moins deux parties de logement, et la partie de connexion (111) étant pliée pour comporter une partie de pliage incurvée (112) dans la région dans le sens de la longueur, et de préférence :
le centre de courbure de chacun des points sur la partie de pliage (112) se trouvant dans l'un d'un premier espace et d'un second espace, qui se trouvent sur des côtés opposés l'un par rapport à l'autre, sur la base de la partie de pliage (112), et
ladite partie de pliage (112) comportant un point de conversion de sens de pliage où l'emplacement du centre de courbure passe du premier espace au second espace ou du second espace au premier espace.

4. Dispositif électrochimique (200) selon l'une quelconque des revendications précédentes, une portion de la partie collée (120, 130) étant pliée de sorte que la troisième couche barrière aux gaz (122) soit définie pour entourer la première couche d'étanchéité collée (121) pour former la première partie de rebord barrière aux gaz, et éventuellement ladite première partie de rebord barrière aux gaz comprenant :
une première partie (120a, 130a) dans laquelle une portion de la partie collée s'étend depuis une surface latérale de la partie de logement dans le sens de la largeur ;
une deuxième partie (120b, 130b) qui s'étend en continu depuis la première partie et est pliée à environ 180 degrés ; et
une troisième partie (120c, 130c) qui s'étend en continu depuis la seconde partie (120b, 130b) dans le sens de la largeur et fait face à la première partie (120a, 130a).

5. Dispositif électrochimique selon la revendication 4, ladite troisième couche barrière aux gaz (122) étant définie par une partie de la première couche barrière aux gaz (101b) ou de la deuxième couche barrière aux gaz (102b), et la troisième couche barrière aux gaz (122) s'étendant de la première couche barrière aux gaz (101b) ou de la seconde couche barrière aux gaz (102b) dans la première partie (120a, 130a) de la première partie de rebord barrière aux gaz, et éventuellement
ladite première partie (120a, 130a) et ladite troisième partie (120c, 130c) de la première partie de rebord barrière aux gaz étant collées l'une à l'autre.

6. Dispositif électrochimique (200) selon l'une quelconque des revendications précédentes, ladite première couche d'étanchéité collée (121) étant collée à une surface du premier film d'emballage (101).

7. Dispositif électrochimique (200) selon l'une quelconque des revendications 4 à 6, ladite première partie de rebord barrière aux gaz comprenant en outre :
une quatrième partie (120d) dans laquelle une portion de la partie collée (120) s'étend en continu depuis la troisième partie (120c) et est en outre pliée ; et
une cinquième partie (120e) s'étendant en continu depuis la quatrième partie (120d) et parallèle à la première partie (120a) et à la troisième partie (120c).

8. Dispositif électrochimique selon l'une quelconque des revendications précédentes, ledit premier film d'emballage (101) et ledit deuxième film d'emballage (102) étant formés d'un seul tenant, et
(a) un premier bord du premier film d'emballage (101) dans le sens de la longueur et un premier bord du deuxième film d'emballage (102) dans le sens de la longueur étant reliés d'un seul tenant l'un à l'autre, et
la portion reliée d'un seul tenant du premier film d'emballage (101) et du deuxième film d'emballage (102) étant pliée dans le sens de la largeur, et un second bord du premier film d'emballage (101) dans le sens de la longueur et un second bord du deuxième film d'emballage (102) dans le sens de la longueur étant collés l'un à l'autre, ou
(b) le premier bord du premier film d'emballage (101) dans le sens de la largeur et le premier bord du deuxième film d'emballage (102) dans le sens de la largeur étant reliés d'un seul tenant l'un à l'autre, et
la portion reliée d'un seul tenant du premier film d'emballage (101) et du deuxième film d'emballage (102) étant pliée dans le sens de la longueur, et un second bord du premier film d'emballage (101) dans le sens de la largeur et un second bord du deuxième film d'emballage (102) dans le sens de la largeur étant collés l'un à l'autre.

9. Dispositif électrochimique (200) selon la revendication 1, ladite première partie de rebord barrière aux gaz comprenant :
une troisième partie (120c) pliée pour faire face au premier film d'emballage (101) ;
une première partie (120a) pliée suivant une direction opposée à la troisième partie (120a) pour faire face au deuxième film d'emballage (102) ; et
une deuxième partie (120b) s'étendant en continu entre la première partie et la troisième partie, et
éventuellement ledit élément d'emballage comprenant en outre un troisième film d'emballage (104), distinct des premier et second films d'emballage (101), (102), le troisième film d'emballage (104) comprenant une couche barrière aux gaz et une couche d'étanchéité, le troisième film d'emballage entourant la première couche d'étanchéité collée, et la couche barrière aux gaz du troisième film d'emballage étant collée à la première couche d'étanchéité (101a) et à la seconde couche d'étanchéité (102a) pour définir la troisième couche barrière aux gaz (122).

10. Dispositif électrochimique (200) selon l'une quelconque des revendications précédentes, ladite première partie de rebord barrière aux gaz (120) étant pliée autour de l'axe dans le sens de la largeur, et le rayon interne de courbure de la région dans le sens de la longueur, dans lequel la première partie de rebord barrière aux gaz est pliée, se trouve dans la plage de 0,2 millimètres à 800 millimètres.

11. Dispositif électrochimique (200) selon l'une quelconque des revendications précédentes, au moins l'un du premier film d'emballage (101) et le deuxième film d'emballage (102) étant étirable dans la région dans le sens de la longueur de sorte que la première partie de rebord barrière aux gaz soit amenée à se plier de manière répétée dans la région dans le sens de la longueur, et éventuellement ladite au moins l'une de la première couche barrière aux gaz (101b) et de la seconde couche barrière aux gaz (102b) comprenant une pluralité de portions de forme concavo-convexe ou de portions en forme de pli dans le sens de la longueur, et en outre éventuellement ledit au moins l'un du premier film d'emballage (101) et du deuxième film d'emballage (102) comprenant un matériau étirable dans la région dans le sens de la longueur.

12. Dispositif électrochimique (200) selon l'une quelconque des revendications précédentes, l'épaisseur du dispositif électrochimique étant inférieure à environ 1 millimètre dans une région dans le sens de la longueur ou dans une région complète dans le sens de la longueur.

13. Dispositif électrochimique (200) selon l'une quelconque des revendications précédentes, ladite première partie de rebord barrière aux gaz comprenant au moins deux régions dans le sens de la longueur de sorte que la première partie de rebord barrière aux gaz soit pliable autour de l'axe dans le sens de la largeur, et lesdites au moins deux régions de la première partie de rebord barrière au gaz étant disposées de manière discontinue.

14. Dispositif électrochimique (200) selon l'une quelconque des revendications précédentes, ladite partie collée (120, 130) comprenant en outre une seconde partie de rebord barrière aux gaz disposée sur un côté opposé à la partie de rebord barrière aux gaz dans le sens de la largeur et s'étendant dans le sens de la longueur, la seconde partie de rebord barrière aux gaz comprenant :
une seconde couche d'étanchéité collée (131) dans laquelle une seconde zone de la première couche d'étanchéité (101a) et une seconde zone de la seconde couche d'étanchéité (102a) sont collées l'une à l'autre ; et
une quatrième couche barrière aux gaz (132) étant en contact avec la seconde couche d'étanchéité collée (131), et la quatrième couche barrière aux gaz (132) comprenant : une partie inférieure (132a) et une partie supérieure (132c) parallèles à la seconde couche d'étanchéité collée et disposées à des hauteurs différentes l'une de l'autre ; et une partie centrale (132b) s'étendant en continu entre la partie inférieure (132a) et la partie supérieure (132c) et pliée pour entourer une extrémité de la seconde couche d'étanchéité collée (131) dans le sens de la largeur.

15. Dispositif électrochimique (200) selon l'une quelconque des revendications précédentes, ledit premier film d'emballage (101) comprenant en outre une première couche d'isolation externe (101c), le deuxième film d'emballage (102) comprenant en outre une seconde couche d'isolation externe (102c), la première couche d'étanchéité (101a) et la première couche d'isolation externe (101c) étant disposées sur des surfaces opposées de la première couche barrière aux gaz (101b), respectivement, et la seconde couche d'étanchéité (102a) et la seconde couche d'isolation externe (102c) étant disposées sur des surfaces opposées de la seconde couche barrière aux gaz (102b), respectivement.
